(19) Europäisches Patentamt
European Patent Office
Office européen des brevets

(11) **EP 4 205 047 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **21777965.1**

(22) Anmeldetag: **10.09.2021**

(51) Internationale Patentklassifikation (IPC):
**G06N 20/00** *(2019.01)* **G06N 3/09** *(2023.01)*

(52) Gemeinsame Patentklassifikation (CPC):
**G06N 20/00; G06N 3/09**

(86) Internationale Anmeldenummer:
**PCT/EP2021/074882**

(87) Internationale Veröffentlichungsnummer:
**WO 2022/069182 (07.04.2022 Gazette 2022/14)**

(54) **VERFAHREN ZUR QUALITÄTSSICHERUNG EINES BEISPIELBASIERTEN SYSTEMS**

QUALITY ASSURANCE METHOD FOR AN EXAMPLE-BASED SYSTEM

PROCÉDÉ D'ASSURANCE QUALITÉ POUR UN SYSTÈME FONDÉ SUR DES EXEMPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2020 DE 102020212235**

(43) Veröffentlichungstag der Anmeldung:
**05.07.2023 Patentblatt 2023/27**

(73) Patentinhaber: **Siemens Mobility GmbH 80997 München (DE)**

(72) Erfinder: **WASCHULZIK, Thomas 85354 Freising (DE)**

(74) Vertreter: **Siemens Patent Attorneys Postfach 22 16 34 80506 München (DE)**

(56) Entgegenhaltungen:
• **DREDZE MARK ET AL: "We're Not in Kansas Anymore: Detecting Domain Changes in Streams", PROCEEDINGS OF THE 2010 CONFERENCE ON EMPIRICAL METHODS IN NATURAL LANGUAGE PROCESSING, 1 October 2010 (2010-10-01), pages 585 - 595, XP055859917, Retrieved from the Internet <URL:https://dl.acm.org/doi/pdf/10.5555/ 1870658.1870715> [retrieved on 20211110]**

• **LU JIANG ET AL: "Boosting Few-Shot Image Recognition Via Domain Alignment Prototypical Networks", 2018 IEEE 30TH INTERNATIONAL CONFERENCE ON TOOLS WITH ARTIFICIAL INTELLIGENCE (ICTAI), IEEE, 5 November 2018 (2018-11-05), pages 260 - 264, XP033475841, DOI: 10.1109/ICTAI.2018.00048**

• **KHODABANDEH MEHRAN ET AL: "A Robust Learning Approach to Domain Adaptive Object Detection", 18 November 2019 (2019-11-18), arXiv.org, pages 1 - 11, XP055872445, Retrieved from the Internet <URL:https://arxiv.org/pdf/ 1904.02361.pdf> [retrieved on 20211213]**

## Beschreibung

Die Erfindung betrifft ein Verfahren zur Qualitätssicherung eines beispielbasierten Systems.

Beispielbasierte Systeme, wie künstliche neuronale Netze, sind grundsätzlich bekannt. Diese werden in der Regel in Bereichen eingesetzt, in denen eine direkte algorithmische Lösung nicht existiert oder mit konventionellen Softwaremethoden nicht adäquat erstellt werden kann. Mittels beispielbasierter Systeme ist es möglich, eine Aufgabenstellung auf der Basis einer Menge von Beispielen zu erstellen und zu trainieren. Die gelernte Aufgabenstellung kann auf eine Menge von weiteren Beispielen angewandt werden.

In der Dissertation "Qualitätsgesicherte effiziente Entwicklung vorwärtsgerichteter künstlicher Neuronaler Netze mit überwachtem Lernen (QUEEN)" von Thomas Waschulzik wird die Entwicklung vorwärtsgerichteter künstlicher neuronaler Netze mit überwachtem Lernen beschrieben (im Folgenden: WASCHULZIK).

Die Veröffentlichung mit dem Titel "Were not in Kansas Anymore: Detecting Domain Changes in Streams", in Proceedings of the 2010 Conference on Empirical Methods in Natural Language Processing, vom 1. Oktober 2010, Seiten 585-595, beschreibt die Anpassung eines Systems bei der Verarbeitung natürlicher Sprache in einer Domäne, wenn dieses System in einer anderen Domäne trainiert wurde.

Die Veröffentlichung mit dem Titel "Boosting Few-Shot Image Recognition Via Domain Alignment Prototypical Networks", in 2018 IEEE 30TH INTERNATIONAL CONDERENCE ON TOOLS WITH ARTIFICIAL INTELLIGENCE (ICTAI), vom 5. November 2018, Seiten 260-264, beschreibt die Einführung eines Moduls zur Ausrichtung nach einer Domäne bei dem sogenannten Few-Shot-Learning.

Vor diesem Hintergrund ist es Aufgabe der Erfindung, die Qualitätssicherung eines beispielbasierten Systems zu verbessern.

Diese Aufgabe wird erfindungsgemäß durch ein Verfahren zur Qualitätssicherung eines beispielbasierten Systems gelöst, bei welchem das beispielbasierte System anhand von erhobenen Beispielen, welche eine Beispielmenge bilden, erstellt und trainiert wird. Das jeweilige Beispiel der Beispielmenge umfasst einen Eingabewert, welcher in einem Eingaberaum liegt. Es wird ein erster Beispielsatz, welcher eine Mehrzahl von Beispielen umfasst, und ein zweiter Beispielsatz, welcher eine Mehrzahl von Beispielen umfasst, erhoben. Eine erste Qualitätsbewertung (bzw. ein Qualitätsindikator), welche eine Abdeckung des Eingaberaums durch Beispiele des ersten Beispielsatzes repräsentiert, wird anhand der Verteilung der Eingabewerte im Eingaberaum ermittelt. Eine zweite Qualitätsbewertung (bzw. ein Qualitätsindikator), welche eine Abdeckung des Eingaberaums durch Beispiele des zweiten Beispielsatzes repräsentiert, wird anhand der Verteilung der Eingabewerte im Eingaberaum ermittelt. Die erste Qualitätsbewertung und zweite Qualitätsbewertung werden miteinander verglichen.

Die Erfindung beruht einerseits auf der Erkenntnis, dass beispielbasierte Systeme, wie neuronale Netze, häufig als Blackbox betrachtet werden. Hierbei wird die interne Informationsverarbeitung nicht analysiert und die Erzeugung eines verständlichen Modells entfällt. Zudem wird das System nicht durch eine Inspektion verifiziert. Dies führt zu Vorbehalten beim Einsatz beispielbasierter Systeme in Aufgabenstellungen mit hoher Kritikalität.

Die Erfindung beruht zudem auf der Erkenntnis, dass bei der Erfassung von Beispielen zur Erstellung und zum Training des beispielbasierten Systems häufig unbekannt ist, wie viele Beispiele in welchen Bereichen des Eingaberaums erfasst werden müssen, um eine geeignete Wissensbasis zu erstellen.

Eine weitere wesentliche Erkenntnis der Erfindung ist, dass Beispiele für beispielbasierte Systeme häufig in mehreren Schritten erfasst werden. Bei diesem iterativen Vorgehen ist es wünschenswert, sicherzustellen, dass zwischen der Erfassung des ersten Beispielsatzes und des zweiten Beispielsatzes keine applikationsrelevanten Unterschiede auftreten oder dass diese Unterschiede zumindest erkannt und bewertet werden können.

Ein Beispiel für eine technische Konstellation, bei welcher Unterschiede zwischen dem ersten und zweiten Beispielsatz relevant sind, ist die alterungsbedingte Änderung von Eigenschaften von Sensoren, die bei der Erfassung der Beispiele verwendet werden: Durch Alterung ändert sich die Kalibrierung der Sensoren und es muss geprüft werden, ob der erste Beispielsatz, welcher in einem ersten Alterungsgrad der Sensoren erfasst wurde, und der zweite Beispielsatz, welcher in einem zweiten Alterungsgrad der Sensoren erfasst wurde, noch die gleiche Aufgabenstellung beschreiben.

Ein weiteres Beispiel für unterschiedliche Beispielsätze liegt vor, wenn einer der Beispielsätze bewusst verfälscht wurde, um den Ersteller oder Benutzer der Wissensbasis zu schaden.

Die erfindungsgemäße Lösung behebt diese Probleme, indem die erste Qualitätsbewertung und die zweite Qualitätsbewertung ermittelt werden und beide Qualitätsbewertungen verglichen werden. Es kann sich dabei beispielsweise herausstellen, dass einer der Beispieldatensätze ganz oder teilweise verworfen werden muss.

Die jeweilige Qualitätsbewertung repräsentiert die Abdeckung des Eingaberaums durch Beispiele, welche anhand der Verteilung der Eingabewerte im Eingaberaum ermittelt wird. Dadurch wird eine Kartierung des Eingaberaums erzielt. Die Kartierung kann als Basis für die weitere Erfassung von Beispielen zur Erstellung einer geeigneten Wissensbasis dienen. So kann die Erfassung der Beispiele entsprechend der Verteilung im Eingaberaum gesteuert werden, obwohl die konkrete Art des Klassifikators oder Approximators noch nicht festgelegt wurde. Auch die Anzahl der Freiheitsgrade, mit denen die Wissensbasis trainiert wird, muss noch nicht festgelegt werden. Durch die Kenntnis darüber, in welchen Bereichen weitere Beispiele erfasst werden müssen, können die Beispiele gezielter erfasst werden und folglich die Kosten für die Erfassung von Beispielen (da insgesamt weniger Beispiele erfasst werden müssen) erheblich reduziert werden.

Mit der Erfindung wurde zudem erkannt, dass eine Voraussetzung für den Einsatz von Kartierungen des Eingaberaums für beispielbasierte Systeme eine geeignete Repräsentation und Kodierung der Merkmale ist. Die Rohdaten werden durch applikationsspezifische Transformationen in eine der Lösung der Aufgabenstellung angepasste Repräsentation umgewandelt. Diese Repräsentation wird mithilfe von Standardverfahren so umgewandelt, dass sie als Aktivität der Eingabeneuronen eines neuronalen Netzes verwendet werden kann (sogenannte Kodierung). Die Qualitätsbewertung, welche die Abdeckung des Eingaberaums durch Beispiele der Beispielmenge repräsentiert, kann auf der Ebene der Repräsentationen und auf der Ebene der Kodierungen eingesetzt werden.

Die Erfindung beruht weiter auf der Erkenntnis, dass die Kodierung und/oder Repräsentation der Eingabemerkmale im Eingaberaum vorzugsweise einen semantischen Zusammenhang mit der gewünschten Ausgabe des beispielbasierten Systems haben. Vorzugsweise ist die Kartierung des Eingaberaums vorzunehmen, wenn beispielsweise durch eine Vorverarbeitung Merkmale bestimmt wurden, die einen semantischen Zusammenhang zu den Ausgaben haben.

Die Erfindung beruht weiter auf der Erkenntnis, dass das Verhältnis zwischen der Anzahl der unabhängigen Eingabemerkmale, welche die Dimension des aufgespannten Zustandsraums bestimmen, und der Anzahl der für die Konfiguration, das Training, die Evaluierung und den Test des Systems zu erfassenden Beispiele vorzugsweise nicht zu groß ist: Denn die Abdeckung des Eingaberaums durch Beispiele ist im Falle eines großen Verhältnisses nicht ausreichend.

Weiter beruht die Erfindung auf der Erkenntnis, dass die Dimensionen, welche den Zustandsraum aufspannen, vorzugsweise voneinander semantisch unabhängig sind (d. h. unabhängige Aspekte der Aufgabe repräsentieren). Weiter vorzugsweise sind die Dimensionen für die Lösung der Aufgabenstellung von gleicher Relevanz.

Weiter vorzugsweise wird für die Qualitätssicherung ausschließlich eine einzige Klassifikationsaufgabe oder Approximationsaufgabe betrachtet. Beispielsweise wird in einem künstlichen neuronalen Netz, welches als Single Shot Multibox Detector (SSD) verwendet wird, ausschließlich die Klassifikation für eine vorgegebene Objektgröße in einer sogenannten Default Box (d. h. mit einem vorgegebenen Seitenverhältnis, mit einer vorgegebenen Skalierung und an einer vorgegebenen Position im Bild) betrachtet.

Vorzugsweise ist das beispielbasierte System für den Einsatz in einer sicherheitsgerichteten Funktion vorgesehen. Der Fachmann versteht unter dem Begriff "sicherheitsgerichtete Funktion" eine Funktion eines Systems, welche sicherheitsrelevant ist, d. h. deren Verhalten Einfluss auf die Sicherheit der Umgebung des Systems hat. Dabei ist der Begriff "Sicherheit" im Sinne der sogenannten Safety zu verstehen. Als "Safety" wird im fachmännischen Sprachgebrauch das Ziel bezeichnet, die Umwelt eines Systems vor Gefahren zu schützen, die von dem System ausgehen. Im Unterschied dazu wird im fachmännischen Sprachgebrauch das Ziel, das System vor Gefahren zu schützen, die von der Umwelt des Systems ausgehen, als "Security" bezeichnet.

Ein weiteres Beispiel für eine Anwendung des erfindungsgemäßen Verfahrens ist eine Konstellation, in der der erste Beispielsatz einer Qualitätssicherung unterzogen wurde und die zugehörige erste Qualitätsbewertung bekannt ist. Wenn die Qualitätsbewertung für den zweiten Beispielsatz entsprechend oder ähnlich ist, kann von einer zufriedenstellenden Qualität des zweiten Beispielsatzes ausgegangen werden.

Gemäß einer bevorzugten Ausführungsform des erfindungsgemäßen Verfahrens wird ein dritter Beispielsatz aus dem ersten und zweiten Beispielsatz gebildet und eine dritte Qualitätsbewertung, welche eine Abdeckung des Eingaberaums durch die Beispiele des dritten Beispieldatensatzes repräsentiert, anhand der Verteilung der Eingabewerte im Eingaberaum ermittelt. Die erste Qualitätsbewertung, die zweite Qualitätsbewertung und die dritte Qualitätsbewertung werden verglichen.

Der dritte Beispielsatz stellt sozusagen die Vereinigungsmenge des ersten und zweiten Beispielsatzes dar.

Ein Beispiel für die Anwendung des dritten Beispielsatzes ist eine Konstellation, bei welcher der zweite Beispielsatz bei Vorliegen von Kenntnissen, die man anhand des ersten Beispielsatzes gewonnen hat, erhoben wird. Beispielsweise wurde der zweite Beispielsatz erhoben, um die Lücken im Eingaberaum zu schließen. Anhand des dritten Beispielsatzes kann ermittelt werden, ob die Lücken erfolgreich geschlossen wurden.

Das Ermitteln der Qualitätsbewertung umfasst: Verteilen von Repräsentanten im Eingaberaum und Zuordnen einer Anzahl von Beispielen der Beispielmenge zu dem jeweiligen Repräsentanten. Die dem Repräsentanten zugeordneten Beispiele liegen in einem Umgebungsbereich des Eingaberaums, welcher den Repräsentanten umgibt. Als erste Qualitätsbewertung wird eine lokale Qualitätsbewertung für den Umgebungsbereich anhand der dem Repräsentanten zugeordneten Beispiele des ersten Beispielsatzes ermittelt. Als zweite Qualitätsbewertung wird eine lokale Qualitätsbewertung für den Umgebungsbereich anhand der dem Repräsentanten zugeordneten Beispiele des zweiten Beispielsatzes ermittelt.

Durch die Zuordnung der Beispiele aus der Beispielmenge zu den Repräsentanten werden Beispieldatenmengen innerhalb der Umgebungsbereiche bestimmt, die den Repräsentanten zugeordnet sind. Für diese Beispieldatenmengen werden jeweils die lokalen Qualitätsbewertungen berechnet, d. h. die erste Qualitätsbewertung und die zweite Qualitätsbewertung.

Beispielsweise kann es von Interesse sein, diejenigen Umgebungsbereiche weiter zu untersuchen, in denen der relative Unterschied zwischen der ersten Qualitätsbewertung und der zweiten Qualitätsbewertung vergleichsweise groß ist.

Die Unterteilung der Beispielmenge in mehrere Umgebungsbereiche bringt die Vorteile mit sich, die sich in der Regel aus dem Ansatz des Teile-und-Herrsche-Verfahrens aus der Informatik ergeben. So kann sich beispielsweise ein Entwickler des beispielbasierten Systems auf diejenigen Teile des Eingaberaums konzentrieren, in denen bestimmte Qualitätskriterien nicht erfüllt sind. In diesen Teilen kann die Qualität entsprechend überprüft und gegebenenfalls verbessert werden. Dadurch wird der Aufwand bei der Bewertung der Gesamtbeispielmenge erheblich reduziert.

Als Repräsentant wird vorzugsweise ein Stellvertreterbeispiel verteilt. Das Verteilen ist vorzugsweise ein Gleichverteilen. Dabei wird beispielsweise im Eingaberaum ein Raster zur Anordnung der Stellvertreterbeispiele gewählt. Das Raster kann für jede Dimension des Eingaberaums einzeln festgelegt werden. Ein Kriterium für die Festlegung des Rasters, beispielsweise bei kategorialen Variablen, kann ein Modell über Soll-Eigenschaften der Beispielverteilung im Eingaberaum sein, welches auf der Basis der Anforderungen an das beispielbasierte System gestellt wird. Das Raster kann hierarchisch aufgebaut sein, um beispielsweise hierarchische Kodierungen abzubilden. Bei der Anwendung eines Rasters zur Anordnung der Stellvertreterbeispiele wird in jedem Hyperkubus im Eingaberaum des Rasters ein Stellvertreterbeispiel verteilt. Bei einem hierarchischen Aufbau des Rasters wird pro Hierarchieebene ein Stellvertreterbeispiel verteilt.

Alternativ ist der Repräsentant ein Zentrum eines Clusters, welches mittels eines Clusterverfahrens bestimmt wird. Das Clusterverfahren wird vorzugsweise zur Bestimmung der Position und zur Bestimmung der Ausdehnung des jeweiligen Clusters im Eingaberaum verwendet. Weiter vorzugsweise wird das Clusterverfahren unter Berücksichtigung von Ausgabewerten der Beispiele, die in einem Ausgaberaum liegen, durchgeführt. Die Cluster können auf der Basis von Anforderungen an Eigenschaften des beispielbasierten Systems festgelegt werden oder auf der Basis einer Teilmenge von Beispieldaten. In der Anwendung des beispielbasierten Systems kann beispielsweise in einer frühen Phase eine Menge von Beispielen erfasst werden, welche aufgrund von Kenntnissen zur Erfüllung der Anforderungen ausgewählt werden. Diese Verteilung der Beispieldaten wird dann qualitätsgesichert. In einer folgenden Projektphase können weitere Beispiele mit der gleichen Verteilung erfasst werden. In diesem Fall stellt jedes Beispiel der qualitätsgesicherten Beispielmenge einen Repräsentanten für die folgende Phase der Erfassung der Beispiele dar. Dadurch wird sichergestellt, dass zu jedem initialen Beispiel eine zusätzliche qualitätsgesicherte Menge von Beispielen erfasst wird. Die Position des Repräsentanten kann beispielsweise durch das Clusterzentrum festgelegt sein. Alternativ kann ein hierarchisches Clusterverfahren verwendet werden, bei welchem pro Cluster und pro Hierarchieebene ein Repräsentant eingefügt wird und bei welchem jedes Beispiel pro Hierarchieebene einem Cluster und folglich einem Repräsentanten zugeordnet wird. Die Menge der Beispiele, welche für die Berechnung der Qualitätsbewertung zur Verfügung steht, wird anschließend über eine vorgegebene Metrik den Clustern und folglich dem Repräsentanten zugeordnet. Für ein Beispiel, das keinem Cluster zugeordnet werden kann, wird vorzugsweise ein neues Cluster mit einem Repräsentanten erstellt. Alternativ wird dieses Beispiel zusammen mit weiteren Beispielen, welche keinem Cluster zugeordnet werden konnten, separat durch eine Qualitätsbewertung erfasst.

Weiter vorzugsweise werden die Beispiele einem Repräsentanten nicht vollständig, sondern nur zu einem vorgegebenen Anteil zugeordnet. Dies kann sich beispielsweise dadurch ergeben, dass ein Clusteralgorithmus verwendet wird, der eine teilweise Zuordnung der Beispiele zu den Beispieldatenmengen liefert (beispielsweise eine prozentuale Zuordnung zu mehreren Umgebungsbereichen, wobei die Summe der Anteile 1 ergibt). Bei der Ermittlung der Qualitätsbewertungen auf Basis dieser teilweisen Zuordnung wird das jeweilige Beispiel entsprechend dem zugehörigen Anteil berücksichtigt.

Die Qualitätsbewertung wird anhand der Anzahl der dem jeweiligen Repräsentanten zugeordneten Beispiele ermittelt. Dies ist besonders vorteilhaft, wenn die konkreten Beispiele im weiteren Verlauf nicht mehr verwendet werden. Eine Vergleichsgröße für den Vergleich der ersten und zweiten Qualitätsbewertung ist der Betrag des Unterschieds zwischen der Anzahl der Beispiele des ersten Beispielsatzes, die dem Repräsentanten zugeordnet sind, und der Anzahl der Beispiele des zweiten Beispielsatzes, die dem Repräsentanten zugeordnet sind.

Alternativ oder zusätzlich werden die konkreten Beispiele oder ein Verweis auf die Beispiele im Repräsentanten (Transformation der Beispieldatenmenge in eine an der Topografie des Eingaberaums orientierten Struktur) gespeichert. Dies ist vorteilhaft, wenn die konkreten Beispiele im weiteren Verlauf benötigt werden.

Der für die Verarbeitung erforderliche Speicherplatz wird vorzugsweise dadurch reduziert, dass die Repräsentanten lediglich dann gespeichert werden, wenn in dem jeweiligen Umgebungsbereich wenigstens ein Beispiel liegt. Wenn die Abdeckung des Eingaberaums ermittelt wird, werden die Umgebungsbereiche, in denen kein Repräsentant erstellt wurde, als "kein Beispiel vorhanden" bewertet. Dennoch kann ein Histogramm über die Anzahl der Beispiele pro Repräsentanten erstellt werden, da die Anzahl der Umgebungsbereiche, in denen kein Beispiel erfasst wurde, mit geringem Aufwand bestimmt werden kann (Summe der zu erwartenden Repräsentanten - erstellte Repräsentanten = Anzahl der Felder ohne erfasste Beispiele).

Bei einer bevorzugten Weiterbildung ist die dritte Qualitätsbewertung eine lokale Qualitätsbewertung für den Umgebungsbereich, die anhand der dem Repräsentanten zugeordneten Beispiele des dritten Beispielsatzes ermittelt wird.

Vorzugsweise werden die Repräsentanten bei der Ermittlung der ersten, zweiten und/oder dritten Qualitätsbewertung jeweils an die gleichen Positionen im Eingaberaum verteilt. Mit anderen Worten: Die Position der Repräsentanten wird vorzugsweise bei allen Beispielsätzen gleich gewählt. Dies ermöglicht eine Zuordnung der Repräsentanten des ersten, zweiten und/oder dritten Beispielsatzes zueinander.

Gemäß einer weiteren bevorzugten Ausführungsform des erfindungsgemäßen Verfahrens umfasst die Qualitätsbewertung ein statistisches Mittel, welches anhand der Beispielmenge und/oder der einem jeweiligen Repräsentanten zugeordneten Beispiele ermittelt wird.

Auf diese Weise können auf Basis der Informationen, die den Repräsentanten zugeordnet sind, Qualitätsbewertungen, beispielsweise mit Mitteln der deskriptiven Statistik (wie beschrieben in einem der folgenden Lehrbücher: "Statistik: Der Weg zur Datenanalyse" (Springer-Lehrbuch) Taschenbuch - 15. September 2016 von Ludwig Fahrmeir (Autor), Christian Heumann (Autor), Rita Künstler (Autor), Iris Pigeot (Autor), Gerhard Tutz (Autor); "Statistik für Dummies" Taschenbuch - 4. Dezember 2019 von Deborah J. Rumsey (Autor), Beate Majetschak (Übersetzer), Reinhard Engel (Übersetzer); "Arbeitsbuch zur deskriptiven und induktiven Statistik" (Springer-Lehrbuch) Taschenbuch - 27. Februar 2009 von Helge Toutenburg (Autor), Michael Schomaker (Mitwirkender), Malte Wißmann (Mitwirkender), Christian Heumann (Mitwirkender)), definiert werden.

Die ermittelten lokalen Qualitätsbewertungen können mittels eines Histogramms sortiert und aufbereitet werden. Beispielsweise wird für jeden Umgebungsbereich der relative Unterschied zwischen der ersten Qualitätsbewertung (des ersten Beispielsatzes) und der zweiten Qualitätsbewertung (des zweiten Beispielsatzes) ermittelt. Es wird auf dieser Basis ein Histogramm erstellt, welches über den relativen Unterschied gebinnt ist. Die Histogrammdarstellung ermöglicht beispielsweise weiter, dass durch Anklicken eines jeweiligen Bins diejenigen Umgebungsbereiche zur Auswahl stehen, die dem Bin zugeordnet wurden. Einer der Umgebungsbereiche kann danach ausgewählt und zusätzliche Informationen, wie die Verteilung der Beispiele im Detail dargestellt werden.

Gemäß einer weiteren bevorzugten Weiterbildung wird als statistisches Mittel ein statistisches Maß, insbesondere ein Mittelwert, Median, Minimum, Maximum und/oder Quantile der Anzahl der einem Repräsentanten zugeordneten Beispiele, ermittelt.

Nach einer weiteren bevorzugten Weiterbildung werden im Eingaberaum benachbarte Umgebungsbereiche ermittelt, deren jeweiligem Repräsentanten eine Anzahl von Beispielen zugeordnet ist, die ein vorgegebenes Qualitätskriterium der Qualitätsbewertung erfüllt.

Vorzugsweise ist das vorgegebene Qualitätskriterium erfüllt, wenn die Anzahl der einem jeweiligen Repräsentanten zugeordneten Beispiele einen vorgegebenen Qualitätsschwellwert unterschreitet, überschreitet oder in einem vorgegebenen Qualitätsband der Qualitätsbewertung liegt.

Bei der Bestimmung, ob zwei Umgebungsbereiche zueinander benachbart sind, können unterschiedliche Nachbarschaftsbeziehungen, beispielsweise die Von-Neumann-Nachbarschaft (auch 4er-Nachbarschaft genannt), die Moore-Nachbarschaft (auch 8er-Nachbarschaft genannt) oder die Nachbarschaft aus der Graphentheorie, verwendet werden. Die definierten Nachbarschaftsbeziehungen müssen bei höherdimensionalen Räumen entsprechend übertragen werden: So werden im dreidimensionalen Raum beispielsweise die 6er-Nachbarschaft für Quader mit gemeinsamen Flächen, die 18er-Nachbarschaft für Quader mit gemeinsamen Kanten und die 26er-Nachbarschaft für Quader mit gemeinsamen Eckpunkten betrachtet. Die Nachbarschaft wird dabei darüber definiert, in wie vielen Dimensionen sich zwei Gitterpunkte unterscheiden dürfen, um noch als benachbart angesehen zu werden.

Bei einer bevorzugten Weiterbildung wird ein Zusammenhangsgebiet innerhalb des Eingaberaums ermittelt, welches aus benachbarten Umgebungsbereichen besteht. Den Repräsentanten der Umgebungsbereiche ist jeweils eine Anzahl von Beispielen zugeordnet. Die Anzahl erfüllt ein vorgegebenes Qualitätskriterium.

Vorzugsweise ist das vorgegebene Qualitätskriterium erfüllt, wenn die Anzahl der einem jeweiligen Repräsentanten zugeordneten Beispiele einen vorgegebenen Qualitätsschwellwert unterschreitet, überschreitet oder in einem vorgegebenen Qualitätsband der Qualitätsbewertung liegt. Weiter vorzugsweise werden in dem jeweiligen Umgebungsbereich weitere Beispiele erfasst, wenn die für den jeweiligen Umgebungsbereich ermittelte Qualitätsbewertung kleiner als ein vorgegebener Qualitätsschwellwert ist. Alternativ oder zusätzlich werden aus einem jeweiligen Umgebungsbereich Beispiele entfernt, wenn die für den jeweiligen Umgebungsbereich ermittelte Qualitätsbewertung größer als ein vorgegebener Qualitätsschwellwert ist.

Bei der Erfüllung des Qualitätskriteriums durch Unterschreitung eines vorgegebenen Qualitätsschwellwerts, kann auf besonders vorteilhafte Weise die Lage und Größe von Bereichen des Eingaberaums ermittelt werden, in denen zu wenige Beispiele erfasst wurden (sozusagen "Löcher im Eingaberaum"). Mit anderen Worten: Ein besonderer Vorteil der Ausführungsform liegt darin, dass Teilbereiche des Eingaberaums identifiziert werden, in denen die Beispielwerte keine ausreichende Basis für eine sicherheitskritische Anwendung bereitstellen. Dies hat wiederum den Vorteil, dass korrigierend eingegriffen werden kann, beispielsweise durch Erfassung von weiteren Beispielen (z. B. als oben beschriebener zweiter Beispielsatz) oder durch die Einschränkung der Wissensbasis in der Anwendung auf die Zusammenhangsgebiete mit hoher Qualität.

Insbesondere hat die Ermittlung der Bereiche, in denen zu wenige Beispiele erfasst wurden, den Vorteil, dass Angriffen durch Adversarial Examples vorbeugend entgegengewirkt werden kann. Denn in diesen Bereichen ist die Erfolgswahrscheinlichkeit eines Angriffs durch ein Adversarial Example vergleichsweise hoch. Sie kann durch die Erfassung von weiteren Beispielen in diesen Bereichen oder die Einschränkung der Wissensbasis auf die Zusammenhangsgebiete mit hoher Qualität verringert werden.

Auf der Basis der ermittelten Zusammenhangsgebiete können Qualitätsbewertungen berechnet werden. So kann beispielsweise die Anzahl der Repräsentanten in einem Zusammenhangsgebiet bestimmt werden. Es können Histogramme über die Größe oder weitere Eigenschaften eines Zusammenhangsgebiets erstellt werden. Des Weiteren können statistische Maße, wie ein Mittelwert, Median, Quantile oder Standardabweichungen von Eigenschaften der Zusammenhangsgebiete berechnet werden. Zudem kann die Ausdehnung der Zusammenhangsgebiete in den Dimensionen des Eingaberaums ermittelt werden. Die Dimensionen können in der Reihenfolge der größten Ausdehnung des Zusammenhangsgebiets geordnet werden.

Die Ermittlung eines Zusammenhangsgebiets ist von besonderem Vorteil bei dem oben beschriebenen Beispiel für die Anwendung des dritten Beispielsatzes, bei welcher der zweite Beispielsatz bei Vorliegen von Kenntnissen, die man anhand des ersten Beispielsatzes gewonnen hat, erhoben wird. Bei diesem Beispiel wurde der zweite Beispielsatz erhoben, um die Lücken im Eingaberaum zu schließen. Diese Lücken können anhand der vorstehend beschriebenen Zusammenhangsgebiete identifiziert und charakterisiert werden. Anhand des dritten Beispielsatzes kann ermittelt werden, ob die Lücken erfolgreich geschlossen wurden.

Nach einer besonders bevorzugten Ausführungsform des erfindungsgemäßen Verfahrens umfasst das jeweilige Beispiel einen Ausgabewert, der in einem Ausgaberaum liegt. Für den jeweiligen Umgebungsbereich wird eine lokale Komplexitätsbewertung ermittelt, welche eine durch die Beispiele des Umgebungsbereichs definierte Komplexität einer Aufgabenstellung des beispielbasierten Systems repräsentiert. Die lokale Komplexitätsbewertung wird durch die relative Lage der Beispiele des Umgebungsbereichs zueinander im Eingaberaum und Ausgaberaum bestimmt.

Der Fachmann versteht die Formulierung "relative Lage der Beispiele des Umgebungsbereichs zueinander im Eingaberaum und Ausgaberaum" vorzugsweise dahingehend, dass die Komplexitätsbewertung basierend auf der Betrachtung der Ähnlichkeit der Abstände der Beispiele im Eingaberaum zu den Abständen im Ausgaberaum definiert ist. Beispielsweise weist die Aufgabenstellung des beispielbasierten Systems eine vergleichsweise geringe Komplexität auf, wenn die Abstände im Eingaberaum (abgesehen von der Skalierung) etwa den Abständen im Ausgaberaum entsprechen.

Daraus ergibt sich der Vorteil, dass Beispiele effektiv erfasst werden können. Denn anhand der Komplexitätsbewertung sind Bereiche bekannt, in denen aufgrund hoher Komplexität der Aufgabenstellung des beispielbasierten Systems eine vergleichsweise hohe Anzahl von Beispielen erfasst werden müssen. Vorzugsweise wird in Bereichen des Eingaberaums, in denen eine höhere Komplexität vorhanden ist, dynamisch die Dichte der Repräsentanten erhöht, bis eine homogene Komplexität erreicht ist und eine ausreichende Menge an Beispielen in der Umgebung der Repräsentanten liegen.

Die Komplexitätsbewertung entspricht beispielsweise den in Abschnitt 4 (QUEEN-Qualitätsindikatoren) von WASCHULZIK beschriebenen Qualitätsindikatoren. Diese Qualitätsindikatoren können sowohl für die Repräsentation oder Kodierung der Merkmale definiert und angewendet werden (vgl. Abschnitt 4.5 von WASCHULZIK).

Bei einer besonders bevorzugten Ausführungsform des erfindungsgemäßen Verfahrens wird eine erste Komplexitätsbewertung für die Beispiele des ersten Beispielsatzes, eine zweite Komplexitätsbewertung für die Beispiele des zweiten Beispielsatzes und eine dritte Qualitätsbewertung für die Beispiele des dritten Beispielsatzes bestimmt. Die dritte lokale Komplexitätsbewertung wird mit der ersten und/oder zweiten lokalen Komplexitätsbewertung verglichen.

Die Aufmerksamkeit ist besonders auf Umgebungsbereiche zu richten, in denen die dritte Komplexitätsbewertung eine signifikant größere Komplexität des dritten Beispielsatzes als die erste und/oder zweite Komplexitätsbewertung anzeigt. In diesen Umgebungsbereichen liegt dann entweder ein Problem bei der Erfassung der Beispiele vor oder es wurde der erste, zweite oder beide Beispieldatensätze verfälscht, um den Ersteller oder Benutzer der Wissensbasis zu schaden. Dieses Anwendungsbeispiel ist von besonderer Bedeutung, weil anhand des ersten und zweiten Beispielsatzes allein die hohe Komplexität nicht detektierbar ist (sondern ausschließlich anhand des dritten Beispielsatzes).

Für die vorstehend beschriebene Konstellation kann es eine Maßnahme sein, Beispiele aus einem der beiden Beispielsätze zu entfernen und anhand der erneut bestimmten Komplexitätsbewertung zu ermitteln, ob eine "Besserung" (d. h. eine geringere Komplexität) erzielt wurde. Ist eine Verbesserung erzielt, können weitere Beispiele entfernt werden. Zeigt sich eine Drift der dritten Komplexitätsbewertung hin zu einer geringeren Komplexität, kann auf diesem Weg fortgeschritten werden.

Für die Handhabung des jeweiligen Unterschieds zwischen der ersten, zweiten und dritten Komplexitätsbewertung kann ein Akzeptanzbereich bzw. ein Akzeptanzmaß definiert werden. Mit anderen Worten: Wenn die Übereinstimmung in einem bestimmten Bereich liegt, werden die erhobenen Beispiele akzeptiert. Das Akzeptanzmaß kann in Abhängigkeit der Größe der Datenmenge gewählt werden. Bei vergleichsweise großen Datenmengen wird der Akzeptanzbereich vorzugsweise enger gewählt und bei vergleichsweise kleinen Datenmengen wird er größer gewählt.

Nach einer weiteren bevorzugten Ausführungsform des erfindungsgemäßen Verfahrens wird eine Komplexitätsverteilung mittels einer Histogrammdarstellung der Komplexitätsbewertung ermittelt.

Vorzugsweise wird der Wertebereich der Komplexitätsbewertungen für die Histogrammdarstellung gebinnt (d. h. in Bereiche unterteilt).

Bei einer bevorzugten Weiterbildung wird die Komplexitätsverteilung über k nächste Nachbarn eines Beispiels im Eingaberaum ermittelt. Auf diese Weise wird für die lokale Umgebung eines Beispiels ermittelt, wie die Komplexität verteilt ist. Insbesondere wird die Charakteristik der Komplexität in der lokalen Umgebung des Beispiels ermittelt und sozusagen ein Fingerabdruck der lokalen Umgebung des Beispiels hinsichtlich der Komplexität ermittelt.

Beispielsweise werden die "gebinnten" Werte auf der y-Achse aufgetragen und die Darstellung des größer werdenden k (der k-nächsten Nachbarn) auf der x-Achse eingetragen.

Um erforderliche Rechenkapazität bei der Ermittlung der Komplexitätsverteilung zu verringern, wird die Schrittweite der Werte von k > 1 gewählt. Beispielsweise wird bei einer Schrittweite von 5 für die Werte von k=5, 10, 15, 20, etc. eine Verteilung der Komplexitätsbewertung ermittelt. Weiter vorzugsweise wird die Schrittweite von k ausschließlich in Bereichen von besonderem Interesse klein gewählt. So wird die Verteilung der Komplexitätsbewertung beispielsweise zunächst mit einer vergleichsweise großen Schrittweite von k berechnet, um dann in einem Bereich von besonderem Interesse mit einer kleinen Schrittweite von k berechnet zu werden.

Weiter vorzugsweise wird für das berechnete Histogrammfeld *(Komplexitätsbewertung gebinnt, k)* die Anzahl der Werte der Komplexitätsbewertung gespeichert. Weiter vorzugsweise wird auch eine Identifikationsinformation (beispielsweise eine Nummer), die das Beispiel, in dessen Umgebung die Komplexitätsverteilung ermittelt wurde, gespeichert.

Gemäß einer bevorzugten Ausführungsform des erfindungsgemäßen Verfahrens wird als Qualitätsindikator für die Repräsentationen der integrierte Qualitätsindikator $QI^2$ gemäß Abschnitt 4.6 von WASCHULZIK verwendet, welcher auf Basis von Formel 4.21 wie folgt definiert sein kann:

$$QI^2(P) = \frac{1}{|P^2|} \sum_{x_i \in P^2} \left( d_{NRE}(x_i) - d_{NRA}(x_i) \right)^2$$

wobei gemäß Formel 4.18 von WASCHULZIK:

$$d_{NRE}(x) = \left. d_{RE}(x) \middle/ \frac{\sum_{y \in P^2} d_{RE}(y)}{|P^2|} \right.$$

der normierte Abstand der repräsentierten Eingaben (NRE) und

$$d_{NRA}(x) = \left. d_{RA}(x) \middle/ \frac{\sum_{y \in P^2} d_{RA}(y)}{|P^2|} \right.$$

der normierte Abstand der repräsentierten Ausgaben (NRA) ist. Dabei ist $x$ das Paar $(x_1, x_2,)$ bestehend aus den zwei Beispielen $x_1$ und $x_2$. $x_1$ und $x_2$ sind Beispiele aus der Beispielmenge $P$. $P = \{p_1, p_1, ..., p_{|P|}\}$ ist die Menge der Elemente von *BAG P,* wobei $|P^2|$ die Anzahl der Elemente des *BAG P* ist. Bei *BAG* handelt es sich um eine Multimenge (in Englisch multiset oder bag genannt), wie sie in Spezifikation 21.5 auf Seite 27 des Anhangs von WASCHULZIK definiert ist. Die Aufgabenstellung *QAG* ist in Definition 3.1 auf Seite 23 von WASCHULZIK definiert und wird dort als QUEEN-Aufgabenstellung bezeichnet.

$d_{RE}(x)$ ist eine Abkürzung für den Abstand im Eingaberaum $d_{re}(vep_{x1}, vep_{x2})$ und $d_{RA}(x)$ ist eine Abkürzung für den Abstand im Ausgaberaum $d_{ra}(vap_{x1}, vap_{x2})$.

Die Definition des Abstands zwischen der Repräsentation von zwei Beispielen gemäß WASCHULZIK basiert auf der Euklidischen Norm. So wird der Abstand im Eingaberaum definiert als (siehe Formel 4.3 von WASCHULZIK):

$$d_{re}(p_{k1}, p_{k2}) = \sqrt{\sum_{i=1}^{aem} \left(vemp_{i,k1} - vemp_{i,k2}\right)^2}$$

mit $p_{k1}$, $p_{k2}$ als Beispiele aus der Menge $P$, wobei

$$p_k = (vep_k, vap_k) = \begin{pmatrix} (vemp_{1,k}, vemp_{2,k}, ..., vemp_{AnzahlEingabeMerkmale,k}), \\ (vamp_{1,k}, vamp_{2,k}, ..., vemp_{AnzahlAusgabeMerkmale,k}) \end{pmatrix}$$

mit

$i$   Laufindex über alle Ausprägungen;

$vemp_{i,kx}$   Ausprägung des Eingabemerkmals $i$ des Beispiels $kx$ mit $kx \in R$ ($R$ ist die Menge der reellen Zahlen); und

$aem$   *AnzahlEingabeMerkmale* der Aufgabenstellung *QAG*.

Der Fachmann versteht die Formulierung "auf der Basis der folgenden Definition" bzw. "auf der Basis von Formel 4.21 wie folgt definiert sein kann" vorzugsweise dahingehend, dass auch Modifikationen und eine Funktion des Qualitäts-indikators $F(QI^2)$ von dem Gedanken dieser Definition umfasst sind.

Bei einer bevorzugten Weiterbildung wird eine aggregierte Komplexitätsbewertung durch Aggregation der lokalen Komplexitätsbewertungen ermittelt.

Die aggregierte Komplexitätsbewertung hat den Vorteil, dass ein Entwickler des beispielbasierten Systems seine Qualitätssicherung einfach durchführen kann.

Beispielsweise wird als aggregierte Komplexitätsbewertung ein Histogramm über die Komplexität in den unterschiedlichen Umgebungsbereichen des Eingaberaums erstellt. Dazu wird der Wertebereich der Komplexitätsbewertungen gebinnt (d. h. in Bereiche unterteilt). In die Bins wird vorzugsweise ausschließlich die Anzahl der Umgebungsbereiche mit entsprechender Komplexität gefasst, wenn die Positionen der Umgebungsbereiche nicht mehr benötigt werden. Vorzugsweise wird dieses Histogramm mit Informationen über die Anzahl der Beispiele zusammengefasst, beispielsweise ebenfalls in einem Histogramm über die Anzahl der dem Repräsentanten zugeordneten Beispiele. Weiter vorzugsweise sind im Histogramm Informationen über die Repräsentanten hinterlegt, damit bei Detailanalysen auf diese zurückgegriffen werden kann.

Gemäß einer weiteren bevorzugten Weiterbildung werden anhand der aggregierten Komplexitätsbewertung Umgebungsbereiche identifiziert, deren Komplexitätsbewertung einen vorgegebenen Komplexitätsschwellwert unterschreitet. In den ermittelten Umgebungsbereichen wird die Aufgabenstellung des beispielbasierten Systems durch eine algorithmische Lösung implementiert. Dies ist besonders vorteilhaft für Anwendungen mit hohen Qualitätsanforderungen, beispielsweise bei sicherheitsgerichteten Funktionen.

Diese bevorzugte Weiterbildung basiert auf der Erkenntnis, dass die exakte Funktionsweise des Systems (d. h. semantische Zusammenhänge) für Bereiche mit geringer Komplexität der Aufgabenstellung häufig bekannt ist. In diesem Fall kann die Aufgabenstellung als konventioneller Algorithmus implementiert werden (anstatt als beispielbasiertes System). Dies ist besonders vorteilhaft, da eine ausreichende Sicherheit der sicherheitsgerichteten Funktion im Rahmen eines Zulassungsverfahrens für die einfache algorithmische Lösung in der Regel einfacher nachweisbar ist.

Es ergibt sich durch diese Weiterbildung zudem der Vorteil, dass in den Bereichen geringer Komplexität keine weiteren Beispiele erfasst werden müssen.

Vorzugsweise wird bei der Suche nach einfachen Bereichen auch nach Datenerhebungsartefakten gesucht, welche einen Zusammenhang zwischen Eingabe und Ausgabe ergeben, die durch spezielle Umstände der Datenerhebung gegeben sind, jedoch keinen in der Praxis verwendbaren Zusammenhang darstellen (wie beispielsweise von dem sogenannten Kluger-Hans-Effekt bekannt: https://de.wikipedia.org/wiki/Kluger_Hans). In Bereichen mit besonders hoher Komplexität werden die Beispiele dahingehend analysiert, ob zum Beispiel Probleme bei der Erhebung und Erfassung der Beispiele aufgetreten sind.

Nach einer weiteren bevorzugten Ausführungsform des erfindungsgemäßen Verfahrens wird der Eingaberaum anhand der Qualitätsbewertung hierarchisch aufgeteilt.

Vorzugsweise wird durch die hierarchische Aufteilung des Eingaberaums eine hierarchische Kartierung des Eingaberaums erzielt. Die Hierarchie wird weiter vorzugsweise aus der Repräsentation oder Kodierung des Eingabemerkmals und/oder aus der Analyse der Komplexität der Aufgabenstellung abgeleitet.

Anhand der Einführung einer zusätzlichen Hierarchie in der Analyse des Eingaberaums kann in den Bereichen, in denen eine hohe Komplexität vorhanden ist, entweder dynamisch die Dichte der Repräsentanten erhöht (bis eine homogene Komplexität erreicht ist) oder eine neue Hierarchieebene eingeführt werden. Die Einführung einer neuen Hierarchieebene erfolgt, indem in dem Bereich des Repräsentanten eine neue Unterteilung mit einer höheren Auflösung hinzugefügt wird. Das Vorgehen kann i-teriert werden, indem in dem hochaufgelösten Bereich bei erneut erhöhter lokaler Komplexität eine weitere Hierarchiestufe hinzugefügt wird. Dadurch kann die Auflösung dynamisch an die jeweilige Aufgabenstellung angepasst werden.

Gemäß einer weiteren bevorzugten Ausführungsform des erfindungsgemäßen Verfahrens ist das beispielbasierte System für den Einsatz in einer sicherheitsgerichteten Funktion vorgesehen, wobei die sicherheitsgerichtete Funktion eine Objekterkennung auf Basis einer Bilderkennung, bei welcher das Objekt unter Verwendung des beispielbasierten Systems erkannt wird, umfasst.

Bei einer bevorzugten Weiterbildung wird die Objekterkennung bei einem automatisierten Betrieb eines Fahrzeugs, insbesondere eines spurgebundenen Fahrzeugs, eines Kraftfahrzeugs, eines Flugzeugs, eines Wasserfahrzeugs und/oder eines Raumfahrzeugs, verwendet.

Die Objekterkennung bei einem automatisierten Betrieb eines Fahrzeugs ist eine besonders zweckmäßige Ausführung einer sicherheitsgerichteten Funktion. Die Objekterkennung ist dabei erforderlich, um z. B. Hindernisse auf dem Fahrweg zu erkennen oder Verkehrssituationen hinsichtlich der Vorfahrt von Verkehrsteilnehmern zu analysieren.

Das Kraftfahrzeug ist beispielsweise ein Kraftwagen, z. B. ein Personenkraftwagen (PKW), ein Lastkraftwagen (LKW) oder ein Kettenfahrzeug.

Das Wasserfahrzeug ist beispielsweise ein Schiff oder U-Boot.

Das Fahrzeug kann bemannt oder unbemannt sein.

Ein Beispiel für einen Anwendungsbereich ist das autonome oder automatisierte Fahren eines Schienenfahrzeugs. Zur Lösung der Aufgabenstellungen werden Objekterkennungssysteme eingesetzt, um Szenen zu analysieren, die mit Sensoren digitalisiert werden. Diese Szeneanalyse ist erforderlich, um z. B. Hindernisse auf dem Fahrweg zu erkennen oder Verkehrssituationen hinsichtlich der Vorfahrt von Verkehrsteilnehmern zu analysieren. Für die Erkennung der Objekte werden zurzeit besonders erfolgreich Systeme eingesetzt, die auf der Nutzung von Beispielen basieren, mit denen Parameter des Mustererkennungssystems trainiert werden. Beispiele dafür sind neuronale Netze, z. B. mit Deep-Learning-Algorithmen.

Gemäß einer weiteren bevorzugten Ausführungsform des erfindungsgemäßen Verfahrens ist das beispielbasierte System für den Einsatz in einer sicherheitsgerichteten Funktion vorgesehen, wobei die sicherheitsgerichtete Funktion eine Klassifikation auf der Basis von Sensordaten von Organismen umfasst.

Die Gewebeklassifikation tierischen oder menschlichen Gewebes ist eine besonders zweckmäßige Ausführung einer sicherheitsgerichteten Funktion im Bereich der medizinischen Bildverarbeitung. Die Organismen umfassen beispielsweise Archaea (Urbakterien), Bacteria (Echte Bakterien) und Eukarya (Kernhaltige) oder von Gewebe von Protista (auch Protoctista, Begründer), Plantae (Pflanzen), Fungi (Pilze, Chitinpilze) und Animalia (Tiere).

Weitere Anwendungsgebiete sind die sichere Steuerung von Industrieanlagen (z. B. Synthese in der Chemie, die Steuerung von Produktionsprozessen, z. B. Walzwerke), eine Klassifikation von chemischen Substanzen (z. B. Umweltgifte, Kampfstoffe), eine Klassifikation von Signaturen von Fahrzeugen (z. B. Radar oder Ultraschallsignaturen) und/oder eine Steuerung im Bereich der Industrieautomatisierung (z. B. Produktion von Maschinen).

Nach einer weiteren bevorzugten Ausführungsform des erfindungsgemäßen Verfahrens umfasst das beispielbasierte System

- ein System mit überwachtem Lernen,
- ein System, das mit den Methoden der Statistik aufgebaut ist,
- vorzugsweise ein künstliches neuronales Netz mit einer oder mehreren Schichten von Neuronen, die nicht Eingabeneuron oder Ausgabeneuron sind und mit Backpropagation trainiert werden,
- insbesondere ein Convolutional Neural Network,
- insbesondere ein Single-Shot-MultiBox-Detector-Netz.

Der Einsatz von künstlichen Neuronalen Netzen ermöglicht häufig eine Verbesserung der Klassifikations- oder Approximationsleistung.

Die eine Schicht oder mehreren Schichten von Neuronen, die nicht Eingabeneuronen oder Ausgabeneuronen sind, werden fachmännisch häufig als verdeckte oder "hidden" Neuronen bezeichnet. Das Training von neuronalen Netzen mit vielen Ebenen an verdeckten Neuronen wird fachmännisch häufig auch als Deep-Learning bezeichnet. Ein spezieller Typ von Deep-Learning-Netzwerken für die Mustererkennung sind die sogenannten Convolutional Neuronal Networks (CNNs). Ein Spezialfall der CNNs sind die sogenannten SSD-Netze (Single Shot MultiBox Detector-Netze). Der Fachmann versteht unter dem Begriff "Single Shot MultiBox Detector" ein Verfahren zur Objekterkennung nach dem Deep-Learning-Ansatz, welches auf einem Convolutional Neural Netzwork basiert und beschrieben ist in: Liu, Wei (October 2016). SSD: Single shot multibox detector. European Conference on Computer Vision. Lecture Notes in Computer Science. 9905. pp. 21-37. arXiv:1512.02325

Die Erfindung betrifft ferner ein Computerprogramm, umfassend Befehle, die bei der Ausführung des Programms durch eine Recheneinheit diese veranlassen, das Verfahren der vorstehend beschriebenen Art durchzuführen.

Die Erfindung betrifft ferner ein computerlesbares Speichermedium, umfassend Befehle, die bei der Ausführung durch eine Recheneinheit diese veranlassen, das Verfahren der vorstehend beschriebenen Art durchzuführen.

Zu Vorteilen, Ausführungsformen und Ausführungsdetails der Merkmale des erfindungsgemäßen Computerprogramms und computerlesbaren Speichermediums kann auf die obige Beschreibung zu den entsprechenden Merkmalen des erfindungsgemäßen Verfahrens verwiesen werden.

Ein Ausführungsbeispiel der Erfindung wird anhand der Zeichnungen erläutert. Es zeigen:

Figur 1    schematisch den Ablauf eines Ausführungsbeispiels eines erfindungsgemäßen Verfahrens,

Figur 2    schematisch den Aufbau eines beispielbasierten Systems mit unüberwachtem Lernen,

Figur 3    schematisch den Aufbau eines beispielbasierten Systems mit überwachtem Lernen gemäß dem Ausführungsbeispiel des erfindungsgemäßen Verfahrens,

Figur 4    schematisch einen zweidimensionalen Eingaberaum gemäß dem Ausführungsbeispiel des erfindungsgemäßen Verfahrens,

Figur 5    schematisch den in Figur 4 gezeigten zweidimensionalen Eingaberaum in einem zweiten Zustand,

Figur 6    eine schematische Seitenansicht eines sich auf eine Fahrstrecke befindenden spurgebundenen Fahrzeugs,

Figur 7    schematisch ein weiteres Beispiel eines zweidimensionalen Eingaberaums gemäß einem weiteren Ausführungsbeispiel des erfindungsgemäßen Verfahrens,

Figur 8    zwei Achsendiagramme, welche die Anwendung der Komplexitätsbewertung auf eine erste synthetische Funktion repräsentieren,

Figur 9    zwei Achsendiagramme, welche die Anwendung der Komplexitätsbewertung auf eine zweite synthetische Funktion repräsentieren, und

Figur 10    zwei Achsendiagramme, welche die Anwendung der Komplexitätsbewertung auf eine dritte synthetische Funktion repräsentieren.

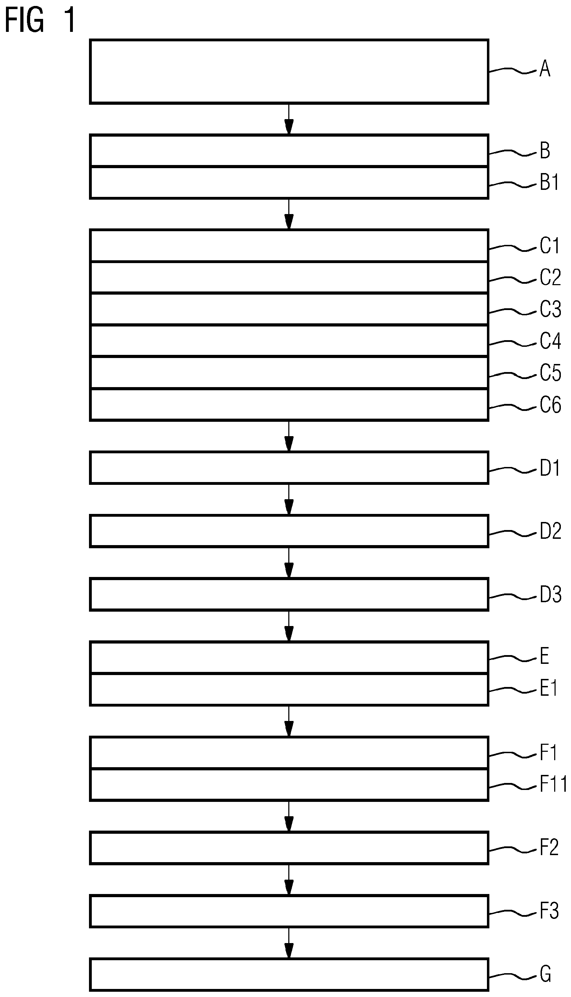

Figur 1 zeigt ein schematisches Ablaufdiagramm, welches den Ablauf eines Ausführungsbeispiels eines erfindungsgemäßen Verfahrens zur Qualitätssicherung eines beispielbasierten Systems repräsentiert. Das Verfahren kann auf beispielbasierte Systeme mit überwachtem und unüberwachtem Lernen angewandt werden.

Bei überwachtem Lernen ist es Ziel, eine Funktion zu lernen, die Daten x (als Eingabewerte) auf ein Label y abbildet. Ein Beispiel von überwachtem Lernen ist die Klassifizierung, bei der beispielsweise Bilddaten x auf eine Klasse y (z. B. Katze) abgebildet wird. Weitere Beispiele von überwachtem Lernen sind Regression, Objekterkennung, Bildbeschriftung etc.

Bei unüberwachtem Lernen ist es Ziel, eine Struktur von Daten x zu lernen (ohne ein Label y zu verwenden). Ein Beispiel von unüberwachtem Lernen ist Clustering, bei dem Gruppen innerhalb der Daten aufgefunden werden sollen, die in einer bestimmten Metrik Ähnlichkeiten aufweisen. Weitere Beispiele von unüberwachtem Lernen sind Dimensionalitätsreduktion oder das Lernen von Merkmalen (sog. feature learning oder representation learning), etc.

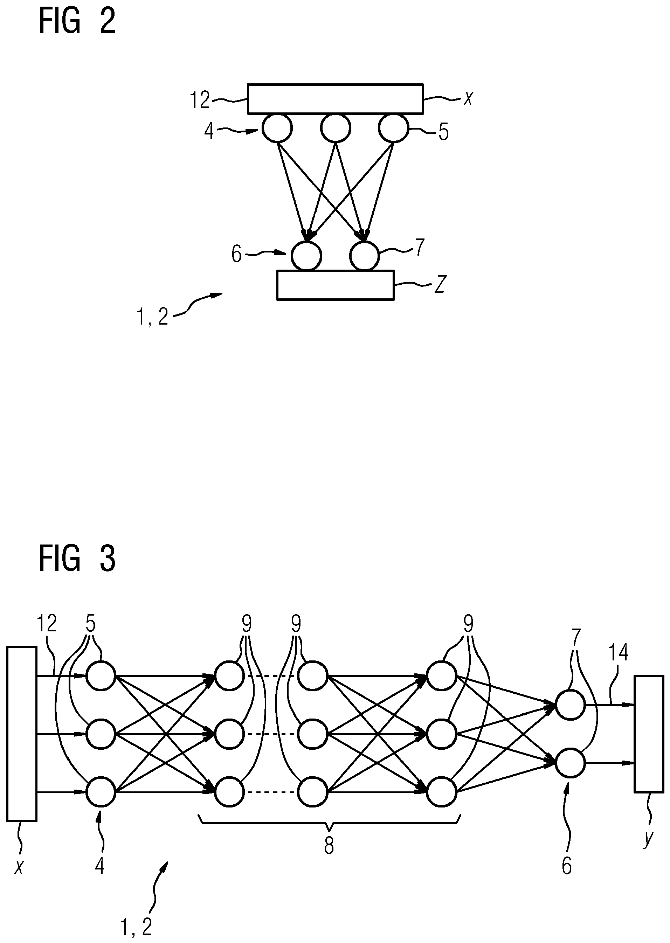

Die Figuren 2 und 3 zeigen Ausführungsbeispiele von beispielbasierten Systemen 1. Figur 2 zeigt schematisch den Aufbau eines Ausführungsbeispiels eines beispielbasierten Systems 1, welches als Autoencoder ausgeführt ist. Autoencoder sind eine Art von künstlichen neuronalen Netzen 2, die zur effizienten Datenkodierung eingesetzt werden können und diese Fähigkeit in unüberwachter Weise lernen. Der Autoencoder bildet die Eingabewerte x auf einen Merkmalsvektor Z ab.

Figur 3 zeigt schematisch den Aufbau eines Ausführungsbeispiels eines beispielbasierten Systems 1 mit überwachtem Lernen, welches als mehrlagiges Perzeptron ausgeführt ist. Weitere Beispiele von Systemen mit überwachtem Lernen können ein rekurrentes neuronales Netz, ein Convolutional Neural Network oder insbesondere ein sogenanntes Single-Shot-MultiBox-Detector-Netz sein.

Das beispielbasierte System 1 wird von einem künstlichen neuronalen Netz 2 gebildet, welches eine Schicht 4 von Eingabeneuronen 5 und eine Schicht 6 von Ausgabeneuronen 7 aufweist.

Das in Figur 3 gezeigte künstliche neuronale Netz 2 weist mehrere Schichten 8 von Neuronen 9 auf, die nicht Eingabeneuronen 5 oder Ausgabeneuronen 7 sind.

Das beispielbasierte System sowie das erfindungsgemäße Verfahren werden mittels eines oder mehrerer Computerprogramme implementiert. Das Computerprogramm umfasst Befehle, die bei Ausführung des Programms durch eine Recheneinheit diese veranlassen, das erfindungsgemäße Verfahren gemäß dem in Figur 1 gezeigten Ausführungsbeispiel durchzuführen. Das Computerprogramm ist auf einem computerlesbaren Speichermedium gespeichert.

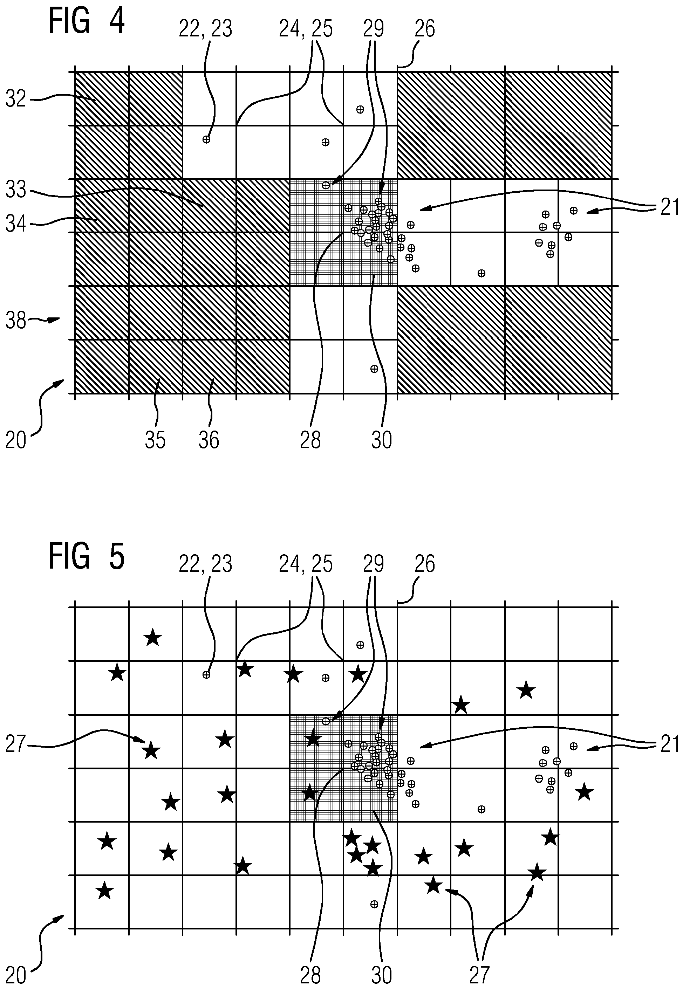

Das beispielbasierte System wird in einer sicherheitsgerichteten Funktion eines Systems eingesetzt. Das Verhalten der Funktion hat demnach Einfluss auf die Safety der Umgebung des Systems. Ein Beispiel für eine sicherheitsgerichtete Funktion ist eine Objekterkennung auf Basis einer Bilderkennung, bei welcher das Objekt unter Verwendung des beispielbasierten Systems 1 erkannt wird (bei überwachtem Lernen). Die Objekterkennung wird beispielsweise bei einem automatisierten Betrieb eines Fahrzeugs, insbesondere eines in Figur 4 gezeigten spurgebundenen Fahrzeugs 40, eines Kraftfahrzeugs, eines Flugzeugs, eines Wasserfahrzeugs oder eines Raumfahrzeugs, verwendet.

Ein weiteres Beispiel für eine sicherheitsgerichtete Funktion ist eine Klassifikation auf der Basis von Sensordaten von Organismen z. B. von Archaea (Urbakterien), Bacteria (Echte Bakterien) und Eukarya (Kernhaltige) oder von Gewebe von Protista (auch Protoctista, Begründer), Plantae (Pflanzen), Fungi (Pilze, Chitinpilze) und Animalia (Tiere), eine sichere Steuerung von Industrieanlagen, eine Klassifikation von chemischen Substanzen, eine Klassifikation von Signaturen von Fahrzeugen oder eine Steuerung im Bereich der Industrieautomatisierung.

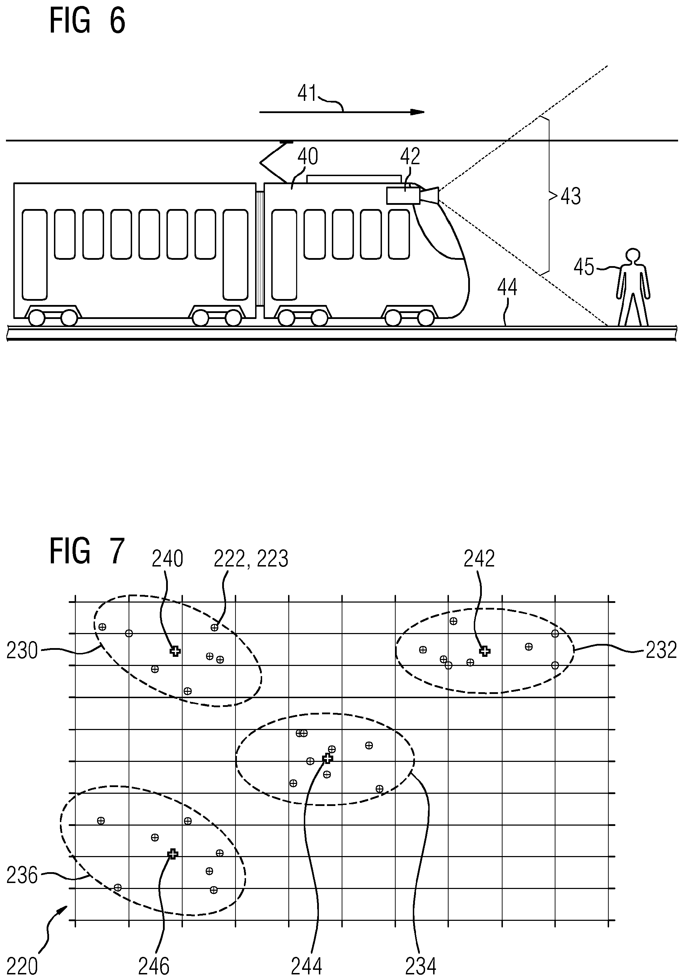

In einem Verfahrensschritt A wird festgelegt, welche Beispiele zu erheben sind. In einem Schritt B werden die Beispiele erhoben: Die erhobenen Beispiele bilden eine Beispielmenge. Das jeweilige Beispiel weist einen Eingabewert 12, welcher in einem Eingaberaum liegt, und einen Ausgabewert 14, welcher in einem Ausgaberaum liegt, auf. Bei der Objekterkennung (als eines von mehreren möglichen Beispielen einer sicherheitsgerichteten Funktion bei überwachtem Lernen) für einen automatisierten Betrieb des in Figur 6 gezeigten spurgebundenen Fahrzeugs 40 werden die Beispiele erhoben, indem das spurgebundene Fahrzeug 40 mit einer Kameraeinheit 42 zur Erfassung von Bildern versehen wird. Die Kameraeinheit 42 ist derart in Fahrtrichtung 41 ausgerichtet, dass ein in Fahrtrichtung 41 vorausliegender räumlicher Bereich 43 von der Kameraeinheit erfasst wird. Das spurgebundene Fahrzeug 40 fährt mit der Kameraeinheit 42 in Fahrtrichtung 41 entlang einer Fahrtstrecke 44. Zur Erfassung der Beispiele werden Szenen, die für die Erstellung und das Training des beispielbasierten Systems 1 zur Objekterkennung relevant sind, nachgestellt. So werden beispielsweise Pappfiguren, Crashtest-Dummies oder Schauspieler 45 eingesetzt, um Personen auf der Fahrtstrecke 44 darzustellen, die mittels des zu erstellenden und zu trainierenden beispielbasierten Systems 1 erkannt werden sollen. Alternativ können Szenen mittels einer sogenannten Virtual Reality nachgestellt werden.

Figur 4 zeigt ein Beispiel eines zweidimensionalen Eingaberaums 20. In der tatsächlichen Anwendung des erfindungsgemäßen Verfahrens werden der Eingaberaum und Ausgaberaum häufig eine höhere Dimensionalität aufweisen.

Gemäß dem erfindungsgemäßen Verfahren wird in einem Verfahrensschritt B1 ein erster Beispielsatz 21, welcher eine Mehrzahl von Beispielen 22 umfasst, erhoben. Die Beispiele 22 des Beispielsatzes 21 sind als Fadenkreuze 23 in Figur 4 dargestellt.

In einem Verfahrensschritt C1 wird eine erste Qualitätsbewertung, welche eine Abdeckung des Eingaberaums durch Beispiele des ersten Beispielsatzes 21 repräsentiert, ermittelt. Bei dem Ermitteln C1 der Qualitätsbewertung werden in einem Verfahrensschritt C2 Repräsentanten im Eingaberaum verteilt. Die Repräsentanten 24 werden gleichverteilt und sind als Kreuzpunkte 25 des gezeigten Gitters 26 dargestellt.

In einem Verfahrensschritt C3 wird einem jeweiligen Repräsentanten 28 eine Anzahl von Beispielen 29 der Beispielmenge zugeordnet. Die dem Repräsentanten 28 zugeordneten Beispiele 29 liegen in einem Umgebungsbereich 30 des Eingaberaums 20, welcher den jeweiligen Repräsentanten 28 umgibt. Der Umgebungsbereich 30 ist beispielhaft in Figur 4 als gepunktete Fläche dargestellt. Als Qualitätsbewertung wird dabei in einem Verfahrensschritt C4 eine erste lokale Qualitätsbewertung für den Umgebungsbereich 30 ermittelt. Die lokale Qualitätsbewertung wird zudem jeweils für weitere in Figur 4 gezeigte Umgebungsbereiche ermittelt.

In einem Verfahrensschritt C5 werden im Eingaberaum benachbarte Umgebungsbereiche 32-36 ermittelt, deren jeweiligem Repräsentanten eine Anzahl von Beispielen zugeordnet ist, die einen vorgegebenen Qualitätsschwellwert unterschreitet. In Figur 4 sind diese Umgebungsbereiche 32-36 als Flächen mit diagonalen Streifen dargestellt. Es handelt sich in dem in Figur 4 gezeigte Beispiel bei den Umgebungsbereichen 32-36 um Bereiche, in denen kein Beispiel liegt. Zudem wird in einem Verfahrensschritt C6 ein Zusammenhangsgebiet 38 innerhalb des Eingaberaums 20 ermittelt, welches aus den benachbarten Umgebungsbereichen 32-36 besteht, deren Repräsentanten jeweils eine Anzahl von Beispielen zugeordnet ist, die einen vorgegebenen Qualitätsschwellwert unterschreitet. Dadurch wird die Lage und Größe von Bereichen des Eingaberaums 20 ermittelt, in denen zu wenige Beispiele erfasst wurden. Mit anderen Worten: Es werden Teilbereiche des Eingaberaums 20 identifiziert, in denen die Beispielswerte keine ausreichende Basis für einen sicherheitskritischen Anwendung bereitstellen.

Anhand der Identifizierung kann korrigierend eingegriffen werden: Dazu werden beispielsweise in einem weiteren Verfahrensschritt D1 Beispiele eines zweiten Beispielsatzes 27 erhoben und die Kenntnisse über den ersten Beispielsatz bei der Erhebung berücksichtigt. Die Beispiele des zweiten Beispielsatzes 27 sind in Figur 5 als Sterne dargestellt.

Entsprechend zu der Ermittlung der ersten lokalen Qualitätsbewertung wird für die Umgebungsbereiche jeweils eine zweite lokale Qualitätsbewertung in einem Verfahrensschritt D2 ermittelt.

Der erste und zweite Beispielsatz bilden gemeinsam als Vereinigungsmenge einen dritten Beispielsatz. In einem Verfahrensschritt D3 wird für die Umgebungsbereiche jeweils eine dritte lokale Qualitätsbewertung ermittelt, welche die Abdeckung des Eingaberaums durch die Beispiele des dritten Beispielsatzes repräsentiert.

Die erste, zweite und dritte Qualitätsbewertung werden in einem Verfahrensschritt E verglichen. Beispielsweise wird in einem Verfahrensschritt E1 ein Unterschied zwischen der dritten Qualitätsbewertung und der ersten oder zweiten Qualitätsbewertung bestimmt. Hat sich die Qualität der Beispielmenge bei der Vereinigungsmenge gegenüber dem ersten Beispielsatz 21 verbessert, kann von einer Verbesserung der Wissensbasis durch das Erheben des zweiten Beispielsatzes 27 ausgegangen werden.

Beispielsweise kann die Qualitätsbewertung anhand der Anzahl der dem jeweiligen Repräsentanten zugeordneten Beispiele ermittelt werden. Eine Vergleichsgröße für den Vergleich der ersten und zweiten Qualitätsbewertung kann der Betrag des Unterschieds zwischen der Anzahl der Beispiele des ersten Beispielsatzes, die dem Repräsentanten zugeordnet sind, und der Anzahl der Beispiele des zweiten Beispielsatzes, die dem Repräsentanten zugeordnet sind, sein.

In einem Verfahrensschritt F1 wird für den jeweiligen Umgebungsbereich eine erste lokale Komplexitätsbewertung ermittelt, welche eine durch den ersten Beispielsatz 22 des Umgebungsbereichs definierte Komplexität einer Aufgabenstellung des beispielbasierten Systems repräsentiert. Dabei wird die lokale Komplexitätsbewertung gemäß einem Verfahrensschritt F11 durch die relative Lage der Beispiele des Umgebungsbereichs zueinander im Eingaberaum 20 und dem Ausgaberaum bestimmt. Das heißt die Komplexitätsbewertung ist basierend auf der Betrachtung der Ähnlichkeit der Abstände der Beispiele im Eingaberaum 20 zu den Abständen im Ausgaberaum definiert.

Beispielsweise weist die Aufgabenstellung des beispielbasierten Systems eine vergleichsweise geringe Komplexität auf, wenn die Abstände im Eingaberaum 20 (abgesehen von der Skalierung) etwa den Abständen im Ausgaberaum entsprechen. Anhand der Komplexitätsbewertung werden Bereiche ermittelt, in denen aufgrund hoher Komplexität der Aufgabenstellung des beispielbasierten Systems eine vergleichsweise hohe Anzahl von Beispielen erfasst werden müssen. Beispielsweise wird in Bereichen des Eingaberaums 20, in denen eine höhere Komplexität vorhanden ist, dynamisch die Dichte der Repräsentanten erhöht, bis eine homogene Komplexität erreicht ist.

Die Komplexitätsbewertung entspricht den in Abschnitt 4 (QUEEN-Qualitätsindikatoren) von WASCHULZIK beschriebenen Qualitätsindikatoren. Diese Qualitätsindikatoren können sowohl für die Repräsentation oder Kodierung der Merkmale definiert und angewendet werden (vgl. Abschnitt 4.5 von WASCHULZIK). Ein Beispiel für diesen Qualitätsindikator für die Repräsentationen ist der integrierte Qualitätsindikator $QI^2$ gemäß Abschnitt 4.6 von WASCHULZIK.

In einem Verfahrensschritt F2 wird für den jeweiligen Umgebungsbereich eine zweite lokale Komplexitätsbewertung bestimmt, welche die durch den zweiten Beispielsatz definierte Komplexität einer Aufgabenstellung des beispielbasierten Systems repräsentiert. Eine dritte lokale Komplexitätsbewertung wird für die Beispiele des dritten Beispielsatzes (Vereinigungsmenge) in einem Verfahrensschritt F3 bestimmt.

In einem Verfahrensschritt G werden die erste, zweite und dritte Komplexitätsbewertung verglichen. Dabei ist die Aufmerksamkeit besonders auf Umgebungsbereiche zu richten, in denen die dritte lokale Komplexitätsbewertung eine signifikant größere Komplexität des dritten Beispielsatzes als die erste und/oder zweite Komplexitätsbewertung anzeigt. In diesen Umgebungsbereichen liegt dann entweder ein Problem bei der Erfassung der Beispiele vor oder es wurde der erste, zweite oder beide Beispieldatensätze 21 und 27 verfälscht, um den Ersteller oder Benutzer der Wissensbasis zu schaden. Dieses Anwendungsbeispiel ist von besonderer Bedeutung, weil anhand des ersten und zweiten Beispielsatzes 21 und 27 allein die hohe Komplexität nicht detektierbar ist (sondern ausschließlich anhand des dritten Beispielsatzes).

Alternativ zu dem in Bezug auf die Figuren 4 und 5 beschriebenen Ausführungsbeispiel, wonach Repräsentanten im Eingaberaum gleichverteilt werden, zeigt Figur 7 ein Ausführungsbeispiel eines Eingaberaums 220, bei dem die Repräsentanten jeweils ein Zentrum eines Clusters, welches mittels eines Clusterverfahrens bestimmt wird, bilden. Die Beispiele 222 der Beispielmenge sind in Figur 7 als Fadenkreuze 223 dargestellt.

Figur 7 zeigt beispielhaft vier Cluster 230, 232, 234 und 236, die jeweils mehrere Beispiele umfassen. Diese Beispiele liegen in der Darstellung innerhalb einer gestrichelten Grenzlinie, die jedoch keine tatsächliche Begrenzung eines Clusters repräsentiert, sondern lediglich zur Illustration eingezeichnet wurde. Die Cluster 230, 232, 234 und 236 weisen jeweils ein zugehöriges Clusterzentrum 240, 242, 244 und 246 (plusförmig dargestellt) auf. Die Clusterzentren 240, 242, 244, 246 liegen jeweils mittig innerhalb des Clusters und werden unabhängig von den Grenzen des Gitters des Eingaberaums einem Cluster zugeordnet.

Die Cluster gemäß Figur 7 haben den Vorteil, dass sie die Topologie der Daten besonders geeignet repräsentieren. Das Gitter gemäß Figuren 4 und 5 hat den Vorteil, dass die nicht abgedeckten Bereiche geeigneter abbildet werden. Beispielsweise kann die Abdeckung des Eingaberaums (gemäß dem Verfahrensschritt C1-C6) über das Gitter berechnet werden und die Komplexitätsbewertung (gemäß dem Verfahrensschritt F1-F3) neben dem Gitter auch über das Clusterzentrum berechnet werden. Welcher Ansatz geeigneter ist, kann auch von dem Verfahren des Neuronalen Netzes abhängen. Wenn sich die Kodierungsneurone im Eingebraum bewegen können, dann wird vorzugsweise der Clusteransatz gewählt oder die Clusterzentren mit den Positionen der Kodierungsneurone im Eingaberaum gleichsetzt.

Um ein Verständnis über die Eigenschaften und das Verhalten der in WASCHULZIK beschriebenen Qualitätsindikatoren als Beispiele einer Komplexitätsbewertung zu erhalten, ist es hilfreich, diese auf synthetische Funktionen (z. B. y=x) anzuwenden. Daraus kann geschlossen werden, wie diese Qualitätsindikatoren Anwendung bei beispielbasierten Systemen finden können.

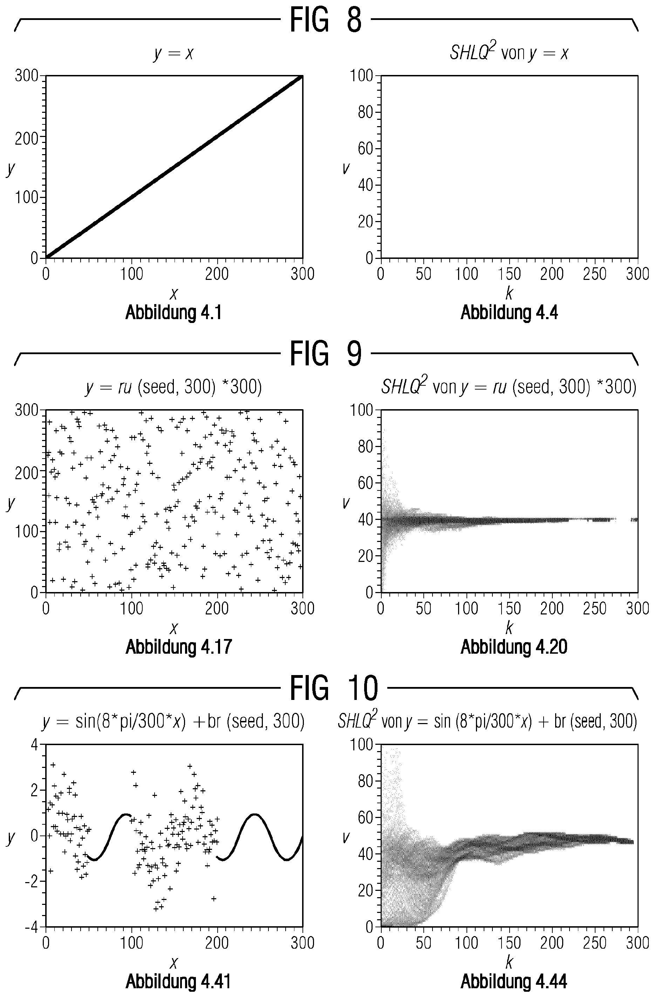

Die Figuren 8 bis 10 zeigen jeweils für eine synthetische Funktion ein Histogramm der Verteilung der Komplexitätsbewertung über k-nächste Nachbarn eines vorausgewählten Beispiels. Das Beispiel ist beispielsweise ein Stellvertreterbeispiel oder ein Zentrum eines Clusters (wie oben beschrieben). Das Beispiel kann zudem ein aus dem Umgebungsbereich eines Repräsentanten ausgewähltes Beispiel sein, welches für eine tiefergehende Untersuchung hinsichtlich der Komplexität der Aufgabenstellung ausgewählt wurde.

Figur 8 zeigt links die Abbildungen 4.1 und rechts die Abbildung 4.4 von WASCHULZIK. Als synthetische Funktion ist in Figur 8 links y=x als Achsendiagramm dargestellt (die Einträge im Achsendiagramm sind als "+" gezeigt). Das Achsendiagramm rechts zeigt ein Histogramm $SHLQ^2$ von $QI^2$ über die k-nächsten Nachbarn eines Beispiels für die Funktion y=x. Es zeigt sich, dass für beliebige lokale Umgebungen k eines Beispiels das gezeigte Histogramm $SHLQ^2$ den Wert Null hat.

Figur 9 zeigt links die Abbildung 4.17 und rechts die Abbildung 4.20 von WASCHULZIK. Als synthetische Funktion ist in Figur 9 links *y=ru(seed,300)\*300* als Achsendiagramm dargestellt. Es handelt sich um eine gleichverteilte Zufallsvariable mit Werten zwischen 0 und 300. Das Achsendiagramm rechts zeigt das Histogramm $SHLQ^2$ von $QI^2$ über die k-nächsten Nachbarn eines Beispiels für die Funktion *y=ru(seed,300)\*300.* Das Achsendiagramm in Figur 9 rechts ist derart skaliert, dass 40 für den Wert 1 steht.

Figur 10 zeigt links die Abbildung 4.41 und rechts die Abbildung 4.44 von WASCHULZIK. Als synthetische Funktion ist in Figur 10 links *y=sin(8\*pi\*x/300)+br(seed,300)* als Achsendiagramm dargestellt. Es handelt sich um eine Sinusfunktion, die in den Bereichen 0 *0 < x ≤ 50 sowie 100 < x ≤ 200* ein stochastisches Rauschen hat. Das Achsendiagramm rechts zeigt das Histogramm $SHLQ^2$ von $QI^2$ über die k-nächsten Nachbarn eines Beispiels für die Funktion *y=sin(8\*pi\*x/300)+br(seed,300).* Das Achsendiagramm in Figur 10 ist derart skaliert, dass 40 für den Wert 1 steht. Der Fachmann erkennt auf dieser Darstellung, dass es mehrere k-Nachbarschaften bis zur Größe ca. 45 gibt, in denen der Wert von $QI^2$ fast 0 ist (zu erkennen an der dunkelgrauen Schattierung der Bins mit kleiner Nummer aufgetragen an der V-Achse) und damit eine fast lineare Abbildung des Eingabe- und Ausgaberaums vorliegt. Analysiert der Fachmann nun durch das Auslesen der Information in dem Histogramm, in der Umgebung welcher Beispiele die niedrige Komplexität vorhanden ist, so erhält er das Beispiel mit x=75 in dessen Nachbarschaft k=45 die Komplexität sehr gering ist. Gleiches gilt für x=225 oder x=275 für k=45. So kann der Fachmann ohne ein Vorwissen darüber, wie die Beispiele im Eingaberaum verteilt sind, einfach, schnell und sicher die Bereiche identifizieren, in denen die Komplexität besonders niedrig oder hoch ist. Durch das Auslesen der Bins mit den hohen Werten auch bei großen Umgebungen kann er Bereiche mit hoher Komplexität identifizieren (z. B. Bin-Nummer 80 bei K=20). Diese Identifikation der Bereiche mit hoher oder niedriger Komplexität kann unabhängig von der Dimension des Eingabe- und Ausgaberaumes erfolgen, da der Abstand der k-nächsten Nachbarn in Räumen beliebiger Dimensionalität bestimmt werden kann. Über das gleichartige Vorgehen kann der Fachmann auch aus den Histogrammen über die Größe der Zusammenhangsbereiche die Repräsentanten identifizieren, in denen z. B. sehr wenige Beispiele enthalten sind. Über den Repräsentanten kann dann die Position im Eingaberaum bestimmt werden, in denen weitere Beispiele erfasst werden müssen.

**Patentansprüche**

**1.** Computerimplementiertes Verfahren zur Qualitätssicherung eines beispielbasierten Systems (1), wobei

- das beispielbasierte System (1) anhand von mittels Sensoren eines Objekterkennungssystems erfassten Beispielen, welche eine Beispielmenge bilden, erstellt und trainiert wird,
- das jeweilige Beispiel (22) der Beispielmenge einen Eingabewert (12), welcher in einem Eingaberaum (20) liegt, umfasst,
- ein erster Beispielsatz (21), welcher eine Mehrzahl von mittels der Sensoren des Objekterkennungssystems erfassten Beispielen umfasst, und ein zweiter Beispielsatz (27), welcher eine Mehrzahl von mittels der Sensoren des Objekterkennungssystems erfassten Beispielen umfasst, erhoben werden (B1, D1),
- eine erste lokale Qualitätsbewertung, welche eine Abdeckung des Eingaberaums durch die Beispiele (29) des ersten Beispielsatzes (21) repräsentiert, anhand der Verteilung der Eingabewerte im Eingaberaum ermittelt wird (C1), wobei im Eingaberaum Repräsentanten (28) verteilt werden und diesen Repräsentanten jeweils eine Anzahl von Beispielen zugeordnet wird, wobei die diesem Repräsentanten zugeordneten Beispiele in einem Umgebungsbereich (30) des Eingaberaums, welcher den Repräsentanten umgibt, liegen und die Qualitätsbewertung anhand der Anzahl der dem Repräsentanten (28) zugeordneten Beispiele (29) ermittelt wird,
- eine zweite lokale Qualitätsbewertung, welche eine Abdeckung des Eingaberaums durch die Beispiele des zweiten Beispielsatzes (27) repräsentiert, anhand der Verteilung der Eingabewerte im Eingaberaum ermittelt wird (D2), wobei im Eingaberaum Repräsentanten verteilt werden und diesen Repräsentanten jeweils eine Anzahl von Beispielen zugeordnet wird, wobei die diesem Repräsentanten zugeordneten Beispiele in einem Umgebungsbereich des Eingaberaums, welcher diesen Repräsentanten umgibt, liegen und die Qualitätsbewertung anhand der Anzahl der diesem Repräsentanten zugeordneten Beispiele ermittelt wird und

- die erste Qualitätsbewertung und zweite Qualitätsbewertung miteinander verglichen werden, wobei eine Vergleichsgröße ermittelt wird, welche dem Betrag des Unterschieds zwischen der Anzahl der dem Repräsentanten zugeordneten Beispiele des ersten Beispielsatzes, und der Anzahl der dem Repräsentanten zugeordneten Beispiele des zweiten Beispielsatzes, entspricht, und wobei in Abhängigkeit der ermittelten Vergleichsgröße einer der Beispieldatensätze ganz oder teilweise verworfen wird, wobei das Objekterkennungssystem eingerichtet ist, Objekte unter Verwendung des beispielbasierten Systems zu erkennen, und bei einem automatisierten Betrieb eines Fahrzeugs, insbesondere eines spurgebundenen Fahrzeugs, eines Kraftfahrzeugs, eines Flugzeugs, eines Wasserfahrzeugs und/oder eines Raumfahrzeugs verwendet wird.

2. Computerimplementiertes Verfahren nach Anspruch 1, wobei

- ein dritter Beispielsatz aus dem ersten und zweiten Beispielsatz gebildet wird, und
- eine dritte Qualitätsbewertung, welche eine Abdeckung des Eingaberaums durch die Beispiele des dritten Beispielsatzes repräsentiert, anhand der Verteilung der Eingabewerte im Eingaberaum ermittelt wird (D3), und
- die erste Qualitätsbewertung, die zweite Qualitätsbewertung und die dritte Qualitätsbewertung verglichen werden (E) .

3. Computerimplementiertes Verfahren nach Anspruch 2, wobei die dritte Qualitätsbewertung eine lokale Qualitätsbewertung für den Umgebungsbereich (30) ist, die anhand der dem Repräsentanten zugeordneten Beispiele des dritten Beispielsatzes ermittelt wird.

4. Computerimplementiertes Verfahren nach wenigstens einem der vorhergehenden Ansprüche,

wobei die Qualitätsbewertung ein statistisches Mittel, welches anhand

- der Beispielmenge und/oder
- der einem jeweiligen Repräsentanten (28) zugeordneten Beispiele nach Anspruch 2

ermittelt wird, umfasst, wobei als statistisches Mittel ein statistisches Maß, insbesondere ein Mittelwert, Median, Minimum und/oder Quantile der Anzahl der einem Repräsentanten zugeordneten Beispiele, ermittelt wird.

5. Computerimplementiertes Verfahren nach wenigstens einem der Ansprüche 3 bis 4, wobei im Eingaberaum (20) benachbarte Umgebungsbereiche (32-36) ermittelt werden (C5), deren jeweiligem Repräsentanten eine Anzahl von Beispielen zugeordnet ist, die ein vorgegebenes Qualitätskriterium der Qualitätsbewertung erfüllt.

6. Computerimplementiertes Verfahren nach Anspruch 5, wobei ein Zusammenhangsgebiet (38) innerhalb des Eingaberaums (20) ermittelt wird (C6), welches aus benachbarten Umgebungsbereichen (32-36) besteht, deren Repräsentanten jeweils eine Anzahl von Beispielen zugeordnet ist, die ein vorgegebenes Qualitätskriterium der Qualitätsbewertung erfüllt.

7. Computerimplementiertes Verfahren nach wenigstens einem der vorhergehenden Ansprüche 3 bis 6, wobei

- das jeweilige Beispiel einen Ausgabewert (14), der in einem Ausgaberaum liegt, umfasst,
- für den jeweiligen Umgebungsbereich eine lokale Komplexitätsbewertung ermittelt wird, welche eine durch die Beispiele des Umgebungsbereichs definierte Komplexität einer Aufgabenstellung des beispielbasierten Systems (1) repräsentiert, und
- die lokale Komplexitätsbewertung durch die relative Lage der Beispiele des Umgebungsbereichs zueinander im Eingaberaum (20) und Ausgaberaum bestimmt wird.

8. Computerimplementiertes Verfahren nach Anspruch 2 und 7, wobei eine erste lokale Komplexitätsbewertung für die Beispiele des ersten Beispielsatzes (F1), eine zweite lokale Komplexitätsbewertung für die Beispiele des zweiten Beispielsatzes (F2) und eine dritte lokale Komplexitätsbewertung für die Beispiele des dritten Beispielsatzes bestimmt wird (F3) und wobei die dritte lokale Komplexitätsbewertung mit der ersten und/oder zweite lokalen Komplexitätsbewertung verglichen wird (G).

**9.** Computerimplementiertes Verfahren nach wenigstens einem der Ansprüche 7 bis 8, wobei eine Komplexitätsverteilung mittels einer Histogrammdarstellung der Komplexitätsbewertung ermittelt wird.

**10.** Computerimplementiertes Verfahren nach Anspruch 9, wobei die Komplexitätsverteilung über k nächste Nachbarn eines Beispiels im Eingaberaum ermittelt wird.

**11.** Computerimplementiertes Verfahren nach wenigstens einem der Ansprüche 7 bis 10, wobei die Komplexitätsbewertung ein integrierter Qualitätsindikator $QI^2$ ist,

- wobei der Qualitätsindikator auf Basis der folgenden Definition bestimmt ist:

$$QI^2(P) = \frac{1}{|P^2|} \sum_{x_i \in P^2} \left( d_{NRE}(x_i) - d_{NRA}(x_i) \right)^2$$

- wobei:

$$d_{NRE}(x) = \left. d_{RE}(x) \middle/ \frac{\sum_{y \in P^2} d_{RE}(y)}{|P^2|} \right.$$

der normierte Abstand der repräsentierten Eingaben und

$$d_{NRA}(x) = \left. d_{RA}(x) \middle/ \frac{\sum_{y \in P^2} d_{RA}(y)}{|P^2|} \right.$$

der normierte Abstand der repräsentierten Ausgaben ist,

- wobei $x$ das Paar $(x_1, x_2,)$ bestehend aus den zwei Beispielen $x_1$ und $x_2$ ist,
- wobei $x_1$ und $x_2$ Beispiele aus der Beispielmenge $P$ sind,
- wobei $P = \{p_1, p_1, ... , p_{|P|}\}$ die Menge der Elemente der Multimenge *BAG P* und
- wobei $|P^2|$ die Anzahl der Elemente der Multimenge *BAG P* ist.

**12.** Computerprogramm, umfassend Befehle, die bei der Ausführung des Programms durch eine Recheneinheit diese veranlassen, das Verfahren nach wenigstens einem der Ansprüche 1 bis 11 durchzuführen.

**13.** Computerlesbares Speichermedium, umfassend Befehle, die bei der Ausführung durch eine Recheneinheit diese veranlassen, das Verfahren nach wenigstens einem der Ansprüche 1 bis 11 durchzuführen.

**Claims**

**1.** Computer-implemented method for quality assurance of an example-based system (1), wherein

- the example-based system (1) is created and trained on the basis of examples captured by means of sensors of an object recognition system and forming an example set,
- the respective example (22) of the example set comprises an input value (12) which lies in an input space (20),
- a first example set (21) comprising a plurality of examples captured by means of the sensors of the object recognition system and a second example set (27) comprising a plurality of examples captured by means of the sensors of the object recognition system are collected (B1, D1),
- a first local quality rating which represents coverage of the input space by the examples (29) of the first example set (21) is determined on the basis of the distribution of input values in the input space (C1), wherein representatives (28) are distributed in the input space and a number of examples is assigned to these

**EP 4 205 047 B1**

representatives in each case, wherein the examples assigned to this representative are located in a surrounding area (30) of the input space which surrounds the representative and the quality rating is determined on the basis of the number of examples (29) assigned to the representative (28),

- a second local quality rating which represents coverage of the input space by examples of the second example set (27) is determined on the basis of the distribution of input values in the input space (D2), wherein representatives are distributed in the input space and a number of examples is assigned to these representatives in each case, wherein the examples assigned to this representative are located in a surrounding area of the input space which surrounds this representative and the quality rating is determined on the basis of the number of examples assigned to this representative and

- the first quality rating and second quality rating are compared with one another, wherein a comparative variable is determined which corresponds to the absolute value of the difference between the number of examples of the first example set assigned to the representative and the number of examples of the second example set assigned to the representative and wherein as a function of the determined comparative variable one of the example datasets is wholly or partially rejected, wherein the object recognition system is designed to identify objects using the example-based system and is used in an automated operation of a vehicle, in particular a trackbound vehicle, a motor vehicle, an aircraft, a watercraft and/or a spacecraft.

2. Computer-implemented method according to claim 1, wherein

   - a third example set is formed from the first and second example set, and
   - a third quality rating which represents coverage of the input space by the examples of the third example set is determined on the basis of the distribution of the input values in the input space (D3), and
   - the first quality rating, the second quality rating and the third quality rating are compared (E).

3. Computer-implemented method according to claim 2, wherein the third quality rating is a local quality rating for the surrounding area (30) and said third quality rating is determined on the basis of the examples of the third example set which are assigned to the representative.

4. Computer-implemented method according to at least one of the preceding claims,

   wherein the quality rating comprises a statistical mean which is determined on the basis of

   - the set of examples and/or
   - the examples which are assigned to a respective representative (28) according to claim 2,

   wherein a statistical measure, in particular a mean, median, minimum, and/or quantiles of the number of examples which are assigned to a representative, is determined as a statistical mean.

5. Computer-implemented method according to at least one of claims 3 to 4, wherein adjacent surrounding areas (32-36) are determined (C5) in the input space (20), the respective representative of which is assigned a number of examples which fulfils a predetermined quality criterion of the quality rating.

6. Computer-implemented method according to claim 5, wherein a connection area (38), which consists of adjacent surrounding areas (32-36), is determined (C6) within the input space (20) and the representatives of said surrounding areas are each assigned a number of examples which fulfils a predetermined quality criterion of the quality rating.

7. Computer-implemented method according to at least one of the preceding claims 3 to 6, wherein

   - the respective example comprises an output value (14) that is located in an output space,
   - for the respective surrounding area, a local complexity rating is determined which represents a complexity of a task of the example-based system (1), said complexity being defined by the examples of the surrounding area, and
   - the local complexity rating is determined by the relative position of the examples of the surrounding area with respect to one another in the input space (20) and the output space.

8. Computer-implemented method according to claim 2 and 7, wherein a first local complexity rating is determined for the examples of the first example set (FI), a second local complexity rating is determined for the examples of the second example set (F2) and a third local complexity rating is determined for the examples of the third example set (F3)

16

and
wherein the third local complexity rating is compared with the first and/or second local complexity rating (G).

9. Computer-implemented method according to at least one of claims 7 to 8,
wherein a complexity distribution is determined by means of a histogram representation of the complexity rating.

10. Computer-implemented method according to claim 9,
wherein the complexity distribution over k-nearest neighbours of an example in the input space is determined.

11. Computer-implemented method according to at least one of claims 7 to 10,
wherein the complexity rating is an integrated quality indicator $QI^2$,

- wherein the quality indicator is determined on the basis of the following definition:

$$QI^2(P) = \frac{1}{|P^2|} \sum_{x_i \in P^2} \left( d_{NRE}(x_i) - d_{NRA}(x_i) \right)^2$$

- wherein:

$$d_{NRE}(x) = d_{RE}(x) \Big/ \frac{\sum_{y \in P^2} d_{RE}(y)}{|P^2|}$$

is the normalised distance of the represented inputs and

$$d_{NRA}(x) = d_{RA}(x) \Big/ \frac{\sum_{y \in P^2} d_{RA}(y)}{|P^2|}$$

is the normalised distance of the represented outputs,
- wherein $x$ is the pair $(x_1, x_2,)$ consisting of the two examples $x_1$ and $x_2$,
- wherein $x_1$ and $x_2$ are examples from the example set $P$,
- wherein $P = \{p_1, p_1, \dots, p_{|P|}\}$ is the number of elements of the multiset *BAG P* and
- wherein $|P^2|$ is the number of elements of the multiset *BAG P*.

12. Computer program, comprising commands which, when the program is executed by a computing unit, cause the computing unit to perform the method according to at least one of claims 1 to 11.

13. Computer-readable storage medium, comprising commands which, when executed by a computing unit, cause the computing unit to perform the method according to at least one of claims 1 to 11.

**Revendications**

1. Procédé mis en œuvre par ordinateur pour s'assurer de la qualité d'un système (1) fondé sur des exemples, dans lequel

- on établit et on entraîne le système (1) fondé sur des exemples à l'aide d'exemples, qui sont détectés au moyen de capteurs d'un objet d'identification d'objets et qui forment une collection d'exemples,
- l'exemple (22) respectif de la collection d'exemples comprend une valeur (12) d'entrée, qui se trouve dans un espace (20) d'entrée,
- on met (B1, D1) en exergue un premier ensemble (21) d'exemples, qui comprend une pluralité d'exemples détectés au moyen des capteurs du système d'identification d'objets, et un deuxième ensemble (27) d'exemples, qui comprend une pluralité d'exemples détectés au moyen des capteurs du système d'identification d'objets,
- on détermine (C1), à l'aide de la répartition des valeurs d'entrée dans l'espace d'entrée, une première évaluation locale de qualité, qui représente un recouvrement de l'espace d'entrée par les exemples (29) du premier ensemble (21) d'exemples, dans lequel on répartit des représentants (28) dans l'espace d'entrée et on affecte, à ce représentant, respectivement un nombre d'exemples, dans lequel les exemples affectés à ce représentant se trouvent dans une zone (30) d'environnement de l'espace d'entrée, qui entoure le représentant et on détermine l'évaluation de qualité à l'aide du nombre des exemples (29) affectés au représentant (28),

- on détermine (D2) à l'aide de la répartition des valeurs d'entrée dans l'espace d'entrée, une deuxième évaluation locale de qualité, qui représente un recouvrement de l'espace d'entrée par les exemples du deuxième ensemble (27) d'exemples, dans lequel on répartit des représentants dans l'espace d'entrée et on affecte à ce représentant respectivement un nombre d'exemples, dans lequel les exemples affectés à ce représentant se trouvent dans une zone d'environnement de l'espace d'entrée, qui entoure ce représentant, et on détermine l'évaluation de la qualité à l'aide du nombre des exemples affectés à ce représentant, et

- on compare la première évaluation de qualité et la deuxième évaluation de qualité entre elles, dans lequel on détermine une grandeur de comparaison, qui correspond à la valeur absolue de la différence entre le nombre des exemples affectés au représentant du premier ensemble d'exemples et le nombre des exemples affectés au représentant du deuxième ensemble d'exemples, et dans lequel, en fonction de la grandeur de comparaison déterminée, on rejette en tout ou partie l'un des ensembles de données d'exemples,

dans lequel le système d'identification d'objets est agencé pour identifier des objets en utilisant le système fondé sur des exemples, et l'on utilise lors d'un fonctionnement automatisé d'un véhicule, en particulier d'un véhicule guidé sur rail, d'un véhicule automobile, d'un aéronef, d'un bateau et/ou d'un véhicule spatial.

2. Procédé mis en œuvre par ordinateur suivant la revendication 1, dans lequel

- on forme le troisième ensemble d'exemples à partir du premier et du deuxième ensembles d'exemples, et
- on détermine (D3), à l'aide de la répartition des valeurs d'entrée dans l'espace d'entrée, une troisième évaluation de la qualité, qui représente un recouvrement de l'espace d'entrée par les exemples du troisième ensemble d'exemples, et
- on compare (E) la première évaluation de la qualité et la deuxième évaluation de la qualité.

3. Procédé mis en œuvre par ordinateur suivant la revendication 2, dans lequel la troisième évaluation de la qualité est une évaluation locale de la qualité pour la zone (30) d'environnement, que l'on détermine à l'aide des exemples affectés au représentant du troisième ensemble d'exemples.

4. Procédé mis en œuvre par ordinateur suivant au moins l'une des revendications précédentes, dans lequel l'évaluation de la qualité comprend un moyen statistique, que l'on détermine à l'aide

- de la collection d'exemples et/ou
- des exemples affectés à un représentant (28) respectif suivant la revendication 2,

dans lequel on détermine, comme moyen statistique, une mesure statistique, en particulier une moyenne, une médiane, un minimum et/ou un quantile du nombre des exemples affectés à un représentant.

5. Procédé mis en œuvre par ordinateur suivant au moins l'une des revendications 3 à 4, dans lequel on détermine (C5) des régions (32-36) d'environnement voisines dans l'espace (20) d'entrée, aux représentants respectifs, desquelles est associé un nombre d'exemples, qui satisfait un critère de qualité donné à l'avance de l'évaluation de la qualité.

6. Procédé mis en œuvre par ordinateur suivant la revendication 5, dans lequel on détermine (C6), à l'intérieur de l'espace (20) de qualité, un domaine (38) de relation, qui est constitué de régions (32-36) d'environnement voisines, aux représentants desquelles est affecté respectivement un nombre d'exemples, qui satisfait un critère de qualité donné à l'avance de l'évaluation de la qualité.

7. Procédé mis en œuvre par ordinateur suivant au moins l'une des revendications 3 à 6 précédentes, dans lequel

- l'exemple respectif comprend une valeur (14) de sortie, qui se trouve dans un espace de sortie,
- pour la zone d'environnement respective, on détermine une évaluation locale de complexité, qui représente une complexité, définie par les exemples de la zone d'environnement, d'une définition de tâche du système (1) fondé sur des exemples, et

- on détermine l'évaluation locale de complexité par la position relative des exemples de la zone d'environnement les uns par rapport aux autres dans l'espace (20) d'entrée et l'espace de sortie.

8. Procédé mis en œuvre par ordinateur suivant la revendication 2 et 7,

dans lequel on détermine (F3) une première évaluation locale de complexité pour les exemples du premier ensemble (F1) d'exemples, une deuxième évaluation locale de complexité pour les exemples du deuxième ensemble (F2) d'exemples et une troisième évaluation locale de complexité pour les exemples du troisième ensemble d'exemples, et

on compare (G) la troisième évaluation locale de complexité à la première et/ou à la deuxième évaluation locale de complexité.

9. Procédé mis en œuvre par ordinateur suivant au moins l'une des revendications 7 à 8, dans lequel on détermine une répartition de complexité au moyen d'une représentation par histogramme de l'évaluation de complexité.

10. Procédé mis en œuvre par ordinateur suivant la revendication 9, dans lequel on détermine la répartition de complexité sur k voisins les plus proches d'un exemple dans l'espace d'entrée.

11. Procédé mis en œuvre par ordinateur suivant au moins l'une des revendications 7 à 10, dans lequel l'évaluation de complexité est un indicateur QI² de qualité intégré,

- dans lequel on détermine l'indicateur de qualité sur la base de la définition suivante :

$$QI^2(P) = \frac{1}{|P^2|} \sum_{x_i \in P^2} \left( d_{NRE}(x_i) - d_{NRA}(x_i) \right)^2$$

- dans laquelle :

$$d_{NRE}(x) = d_{RE}(x) \Big/ \frac{\sum_{y \in P^2} d_{RE}(y)}{|P^2|}$$

représente l'écart normé des entrées représentées et

$$d_{NRA}(x) = d_{RA}(x) \Big/ \frac{\sum_{y \in P^2} d_{RA}(y)}{|P^2|}$$

l'écart normé des sorties représentées,
- dans lequel $x$ est la paire $(x_1, x_2)$ constituée des deux exemples $x_1$ et $x_2$,
- dans lequel $x_1$ et $x_2$ sont des exemples de l'ensemble $P$ d'exemples,
- dans lequel $P = \{p_1, p_1, ..., p_{|P|}\}$ est la collection des éléments de la multicollection **BAG P,** et
- dans lequel $|P^2|$ est le nombre des éléments de la multicollection **BAG P.**

12. Programme d'ordinateur, comprenant des instructions, qui, lors de l'exécution du programme par une unité informatique, font que celles-ci exécutent le procédé suivant au moins l'une des revendications 1 à 11.

13. Support de mémoire déchiffrable par ordinateur, comprenant des instructions, qui, lors de l'exécution par une unité informatique, font que celles-ci exécutent le procédé suivant au moins l'une des revendications 1 à 11.

FIG 1

| | |
|---|---|
| | A |
| | B |
| | B1 |
| | C1 |
| | C2 |
| | C3 |
| | C4 |
| | C5 |
| | C6 |
| | D1 |
| | D2 |
| | D3 |
| | E |
| | E1 |
| | F1 |
| | F11 |
| | F2 |
| | F3 |
| | G |

FIG 2

FIG 3

FIG 4

FIG 5

# FIG 6

41

40    42

43

45

44

# FIG 7

240    222, 223    242

230

232

236

220    246    244    234

FIG 8

$y = x$

Abbildung 4.1

$SHLQ^2$ von $y = x$

Abbildung 4.4

FIG 9

$y = ru$ (seed, 300) *300)

Abbildung 4.17

$SHLQ^2$ von $y = ru$ (seed, 300) *300)

Abbildung 4.20

FIG 10

$y = sin(8*pi/300*x) + br$ (seed, 300)

Abbildung 4.41

$SHLQ^2$ von $y = sin (8*pi/300*x) + br$ (seed, 300)

Abbildung 4.44

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Were not in Kansas Anymore: Detecting Domain Changes in Streams. *Proceedings of the 2010 Conference on Empirical Methods in Natural Language Processing*, 01 October 2010, 585-595
- Boosting Few-Shot Image Recognition Via Domain Alignment Prototypical Networks. *2018 IEEE 30TH INTERNATIONAL CONDERENCE ON TOOLS WITH ARTIFICIAL INTELLIGENCE (ICTAI)*, 05 November 2018, 260-264
- Statistik: Der Weg zur Datenanalyse. **LUDWIG FAHRMEIR** ; **CHRISTIAN HEUMANN** ; **RITA KÜNSTLER** ; **IRIS PIGEOT** ; **GERHARD TUTZ**. Taschenbuch. Springer, September 2016, vol. 15

- Statistik für Dummies. **DEBORAH J. RUMSEY**. Taschenbuch. December 2019, vol. 4
- Arbeitsbuch zur deskriptiven und induktiven Statistik. **HELGE TOUTENBURG**. Taschenbuch. Springer, February 2009, vol. 27
- **LIU, WEI**. SSD: Single shot multibox detector. European Conference on Computer Vision. Lecture Notes in Computer Science. *arXiv:1512.02325*, October 2016, vol. 9905, 21-37